(19) Europäisches Patentamt
European Patent Office
Office européen des brevets

(11) **EP 3 447 769 B1**

(12) **EUROPEAN PATENT SPECIFICATION**

(45) Date of publication and mention
of the grant of the patent:
**30.03.2022   Bulletin 2022/13**

(21) Application number: **17785258.9**

(22) Date of filing: **24.02.2017**

(51) International Patent Classification (IPC):
**G10L 25/78** *(2013.01)*     **G10L 25/84** *(2013.01)*
*G10L 21/0216* *(2013.01)*     *G10L 25/06* *(2013.01)*
*G10L 25/09* *(2013.01)*     *G10L 25/18* *(2013.01)*
*G10L 25/21* *(2013.01)*

(52) Cooperative Patent Classification (CPC):
**G10L 25/84; G10L 25/78;** G10L 21/0216;
G10L 25/06; G10L 25/09; G10L 25/18; G10L 25/21

(86) International application number:
**PCT/CN2017/074798**

(87) International publication number:
**WO 2017/181772 (26.10.2017 Gazette 2017/43)**

(54) **VOICE DETECTION METHOD AND APPARATUS, AND STORAGE MEDIUM**

VERFAHREN ZUR STIMMENERKENNUNG UND VORRICHTUNG SOWIE SPEICHERMEDIUM

PROCÉDÉ ET APPAREIL DE DÉTECTION DE PAROLE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **22.04.2016   CN 201610257244**

(43) Date of publication of application:
**27.02.2019   Bulletin 2019/09**

(73) Proprietor: **Tencent Technology (Shenzhen)
Company Limited
Shenzhen, Guangdong 518000 (CN)**

(72) Inventor: **FAN, Haijin
Shenzhen
Guangdong 518057 (CN)**

(74) Representative: **Gunzelmann, Rainer
Wuesthoff & Wuesthoff
Patentanwälte PartG mbB
Schweigerstraße 2
81541 München (DE)**

(56) References cited:
EP-A1- 2 434 481          WO-A1-2015/117410
CN-A- 101 197 130       CN-A- 101 625 857
CN-A- 101 685 446       CN-A- 103 117 067
CN-A- 104 021 789       CN-A- 104 409 081
US-A1- 2015 332 667

**Description**

RELATED APPLICATION

This application claims priority to Chinese Patent Application No. 2016102572447, entitled "VOICE DETECTION METHOD AND APPARATUS" filed on April 22, 2016.

FIELD OF THE TECHNOLOGY

Embodiments of the present invention relate to the field of computers, and specifically, to a voice detection method and apparatus, and a storage medium.

BACKGROUND OF THE DISCLOSURE

At present, voice signals begin to be applied to implement control in many fields to simplify operations and improve user experience. For example, a voice signal may be used as a voice input password. However, in a related technology, a voice detection manner generally used for a voice signal is extracting a single characteristic from an input signal. The single characteristic extracted in this way is often relatively sensitive to noise, and an interference sound cannot be accurately distinguished from a voice signal, thereby causing voice detection accuracy to reduce. US 2015/332667A1 discloses a voice detection method that analyzes extracted time-domain and frequency-domain features of each audio frame to determine whether or not the audio frame includes speech.
CN 104409081 A and CN 101625857 A disclose further methods for detecting certain voice characteristics.
For the foregoing problem, an effective solution has not yet been provided.

SUMMARY

The present invention is defined in the independent claims. Further aspects of the invention are defined in the dependent claims. Embodiments of the present invention provide a voice detection method and apparatus and a storage medium, which may solve at least a technical problem that voice detection accuracy is relatively low in a related voice detection method.
In the embodiments of the present invention, a to-be-detected audio signal is divided into a plurality of audio segments, and an audio characteristic in each audio segment of the plurality of audio segments is extracted, where the audio characteristic includes at least a time domain characteristic and a frequency domain characteristic of the audio segment. By virtue of the solution, a plurality of characteristics of an audio segment in different domains are used to accurately detect at least one target voice segment from the plurality of audio segments, so as to reduce interference of a noise signal in the audio segments to a voice detection process, thereby increasing voice detection accuracy, and solving a problem in a related technology that detection accuracy is relatively low when voice detection is performed by using only a single characteristic.
In addition, when the at least one target voice segment is accurately detected, a human-computer interaction device can quickly determine, in real time, a starting moment and an ending moment of a voice segment formed by the at least one target voice segment, so that the human-computer interaction device can accurately respond to a detected voice in real time, and an effect of natural human-computer interaction is achieved. In addition, by accurately detecting the starting moment and the ending moment of the voice segment formed by the at least one target voice segment, the human-computer interaction device also achieves an effect of increasing human-computer interaction efficiency, and solves a problem in a related technology that the human-computer interaction efficiency is relatively low because an interaction person needs to press a control button to trigger and start a human-computer interaction process.

BRIEF DESCRIPTION OF THE DRAWINGS

The accompanying drawings described herein are used to provide deeper understanding about the present disclosure, and form a portion of this application. Schematic embodiments of the present invention and descriptions about the exemplary embodiments are used to construe the present disclosure, and do not constitute an inappropriate limitation on the present disclosure. In the figures:

FIG. 1 is a schematic diagram of an application environment of an optional voice detection method according to an embodiment of the present invention;

FIG. 2 is a schematic diagram of an application environment of another optional voice detection method according to an embodiment of the present invention;

FIG. 3 is a schematic flowchart of an optional voice detection method according to an embodiment of the present invention;

FIG. 4 is a schematic waveform diagram of an optional voice detection method according to an embodiment of the present invention;

FIG. 5 is a schematic waveform diagram of another optional voice detection method according to an embodiment of the present invention;

FIG. 6 is a schematic waveform diagram of still another optional voice detection method according to an embodiment of the present invention;

FIG. 7 is a schematic waveform diagram of still another optional voice detection method according to an embodiment of the present invention;

FIG. 8 is a schematic waveform diagram of still another optional voice detection method according to an embodiment of the present invention;

FIG. 9 is a schematic flowchart of another optional voice detection method according to an embodiment of the present invention;

FIG. 10 is a schematic diagram of an optional voice detection apparatus according to an embodiment of the present invention; and

FIG. 11 is a schematic diagram of an optional voice detection device according to an embodiment of the present invention.

DESCRIPTION OF EMBODIMENTS

To make a person skilled in the art understand the solutions in the present disclosure better, the following clearly and completely describes the technical solutions in the embodiments of the present invention with reference to the accompanying drawings in the embodiments of the present invention. Apparently, the described embodiments are merely some but not all of the embodiments of the present invention. Other embodiments obtained by a person of ordinary skill in the art based on the embodiments of the present invention without creative efforts may fall within the protection scope of the present invention.

It should be noted that, the terms such as "first" and "second" in the specification and claims of the present disclosure and the accompanying drawings are used to distinguish similar objects, but are not necessarily used to describe a specific sequence or a precedence level. It should be understood that, data used in this way may be interchanged in a proper circumstance, so that the embodiments of the present invention described herein can be implemented in a sequence different from those shown in the drawings or described herein if the resulting subject-matter still is within the scope of the appended claims. In addition, terms "include" and "have" and any variation thereof are intended to cover nonexclusive including. For example, a process, method, system, product, or device including a series of steps or units are not limited to those clearly listed steps or units, but may include another step or unit that is not clearly listed or is inherent for the process, method, product or device.

Embodiment 1

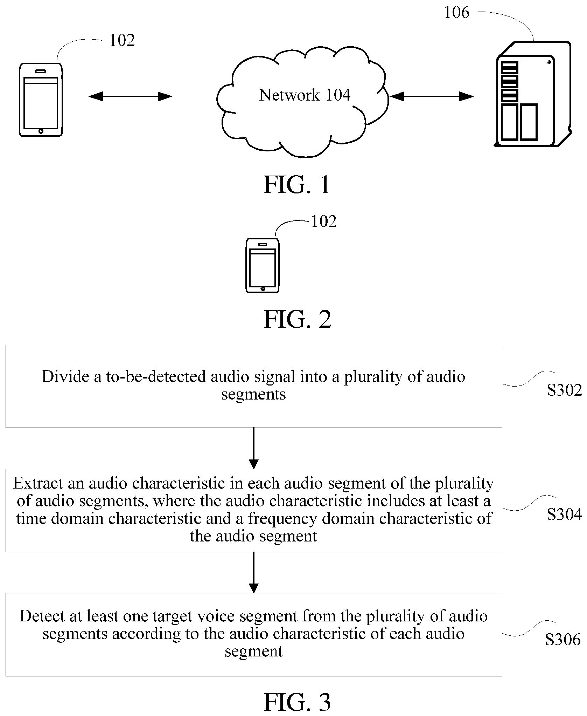

According to an embodiment of the present invention, an embodiment of a voice detection method is provided. Optionally, in this embodiment, the voice detection method may be but is not limited to being applied to an application environment shown in FIG. 1. A terminal 102 obtains a to-be-detected audio signal, and sends the to-be-detected audio signal to a server 106 via a network 104. The server 106 divides the to-be-detected audio signal into a plurality of audio segments, extracts an audio characteristic in each audio segment of the plurality of audio segments, where the audio characteristic includes at least a time domain characteristic and a frequency domain characteristic of the audio segment, and detects at least one target voice segment from the plurality of audio segments according to the audio characteristic of each audio segment. A plurality of characteristics of an audio segment in a time domain and a frequency domain are used to accurately detect at least one target voice segment from a plurality of audio segments of an audio signal by virtue of complementarities of the characteristics, thereby ensuring accuracy of detecting a voice segment formed by the at least one target voice segment.

Optionally, in this embodiment, the voice detection method may be further but is not limited to being applied to an application environment shown in FIG. 2. That is, after the terminal 102 obtains the to-be-detected audio signal, the terminal 102 performs an audio segment detection process in the voice detection method. The specific process may refer to the foregoing content, and details are not described herein again.

It should be noted that, in this embodiment, the terminal shown in FIG. 1 and FIG. 2 is only an example. Optionally, in this embodiment, the terminal may include but is not limited to at least one of the following: a mobile phone, a tablet computer, a notebook computer, a desktop PC, a digital television, or another human-computer interaction device. The foregoing is only an example, and this is not limited in this embodiment. Optionally, in this embodiment, the foregoing network may include but is not limited to at least one of the following: a wide area network, a metropolitan area network, or a local area network. The foregoing is only an example, and this is not limited in this embodiment.

According to an embodiment of the present invention, a voice detection method is provided. As shown in FIG. 3, the method includes:

S302: Divide a to-be-detected audio signal into a plurality of audio segments.

S304: Extract an audio characteristic in each audio segment of the plurality of audio segments, where the audio characteristic includes at least a time domain characteristic and a frequency domain characteristic of the audio segment.

S306: Detect at least one target voice segment from the plurality of audio segments according to the audio characteristic of each audio segment.

Optionally, in this embodiment, the voice detection method may be but is not limited to being applied to at least one of the following scenarios: an intelligent robot chat system, an automatic question-answering system, human-computer chat software, or the like. That is, in a process of applying the voice detection method provided in this embodiment to human-computer interaction, an audio characteristic, which includes at least characteristics of an audio segment in a time domain and a frequency domain, is extracted from the audio segment, so that at least one target voice segment can be accurately detected from a plurality of audio segments into which a to-be-detected audio signal is divided. As such, a device used for human-computer interaction can learn a starting moment and an ending moment of a voice segment formed by the at least one target voice segment, and the device can accurately reply after obtaining complete voice information that a user wants to express. Herein, in this embodiment, the voice segment may include but is not limited to: one target voice segment or a plurality of consecutive target voice segments. Each target voice segment includes a starting moment and an ending moment of the target voice segment. This is not limited in this embodiment.

It should be noted that, in this embodiment, by means of a human-computer interaction device, a to-be-detected audio signal is divided into a plurality of audio segments, and an audio characteristic in each audio segment of the plurality of audio segments is extracted, where the audio characteristic includes at least a time domain characteristic and a frequency domain characteristic of the audio segment. By virtue of the solution, a plurality of characteristics of an audio segment in different domains are used to accurately detect at least one target voice segment from the plurality of audio segments, so as to reduce interference of a noise signal in the audio segments to a voice detection process, thereby increasing voice detection accuracy, and solving a problem in a related technology that detection accuracy is relatively low when voice detection is performed by using only a single characteristic.

In addition, when the at least one target voice segment is accurately detected, a human-computer interaction device can quickly determine, in real time, a starting moment and an ending moment of a voice segment formed by the at least one target voice segment, so that the human-computer interaction device can accurately respond, in real time, to voice information obtained by means of detection, and an effect of natural human-computer interaction is achieved. In addition, by accurately detecting the starting moment and the ending moment of the voice segment formed by the at least one target voice segment, the human-computer interaction device also achieves an effect of increasing human-computer interaction efficiency, and solves a problem in a related technology that the human-computer interaction efficiency is relatively low because an interaction person needs to press a control button to trigger and start a human-computer interaction process.

The audio characteristic includes the following: a signal zero-crossing rate in a time domain, short-time energy in a time domain, spectral flatness in a frequency domain, and signal information entropy in a time domain, and optionally at least one of a self-correlation coefficient, a signal after wavelet transform, signal complexity, or the like.

It should be noted that, 1) the signal zero-crossing rate may be but is not limited to being used to eliminate interference from some impulse noises; 2) the short-time energy may be but is not limited to being used to measure an amplitude value of the audio signal, and eliminate interference from speech voices of an unrelated population with reference to a threshold; 3) the spectral flatness may be but is not limited to being used to calculate, within a frequency domain, a signal frequency distribution characteristic, and determine whether the audio signal is a background white Gaussian noise according to a value of the characteristic; 4) the signal information entropy in the time domain may be but is not limited to being used to measure an audio signal distribution characteristic in the time domain, and the characteristic is used to distinguish a voice signal from a common noise. In this embodiment, the plurality of characteristics in the time domain and the frequency domain are integrated into a voice detection process to resist interference from an impulse noise or a background noise, and enhance robustness, so as to accurately detect at least one target voice segment from a plurality of audio segments into which a to-be-detected audio signal is divided. Further, a starting moment and an ending moment of a voice segment formed by the at least one target voice segment can be accurately obtained, and therefore natural human-computer interaction can be implemented.

Optionally, in this embodiment, a manner of detecting at least one target voice segment from a plurality of audio segments in an audio signal according to an audio characteristic of an audio segment may include but is not limited to: determining whether the audio characteristic of the audio segment satisfies a predetermined threshold condition; when the audio characteristic of the audio segment satisfies the predetermined threshold condition, detecting that the audio segment is a target voice segment.

It should be noted that, in this embodiment, when determining whether the audio characteristic of the audio segment satisfies the predetermined threshold condition, a current audio segment used for the determining may be obtained from the plurality of audio segments according to at least one of the following sequences: 1) according to an input sequence of the audio signal; 2) according to a predetermined sequence. The predetermined sequence may be a random sequence, or may be a sequence arranged according to a predetermined rule, for example, according to a sequence of sizes of the audio segments. The foregoing is only an example, and this is not limited in this embodiment.

In addition, in this embodiment, the predetermined threshold condition may be but is not limited to being adaptively updated and adjusted according to varying scenarios. The predetermined threshold condition used to compare with the audio characteristic is constantly updated, to ensure that the at least one target voice segment is accurately detected from the plurality of audio segments in a detection process according to different scenarios. Further, for a plurality of characteristics of an audio segment in a plurality of domains, whether corresponding predetermined threshold conditions are satisfied is separately determined, to perform determining and screening on the audio segment for a plurality of times, thereby ensuring that a target voice segment is accurately detected.

Optionally, in this embodiment, when an audio segment is obtained from a plurality of audio segments according to an input sequence of an audio signal, to determine whether an audio characteristic of the audio segment satisfies a predetermined threshold condition, the detecting at least one target voice segment from the plurality of audio segments according to the audio characteristic of each audio segment may include: repeatedly performing the following steps, until a current audio segment is a last audio segment in the plurality of audio segments, where the current audio segment is initialized as a first audio segment in the plurality of audio segments:

S1: Determine whether the audio characteristic of a current audio segment satisfies a predetermined threshold condition.

S2: When the audio characteristic of the current audio segment satisfies the predetermined threshold condition, detect that the current audio segment is a target voice segment.

S3: When the audio characteristic of the current audio segment does not satisfy the predetermined threshold condition, update the predetermined threshold condition according to at least the audio characteristic of the current audio segment, to obtain an updated predetermined threshold condition.

S4: Determine whether the current audio segment is the last audio segment in the plurality of audio segments, and if the current audio segment is not the last audio segment, use a next audio segment of the current audio segment as the current audio segment.

It should be noted that, in this embodiment, the predetermined threshold condition may be but is not limited to being updated according to at least an audio characteristic of a current audio segment, to obtain an updated predetermined threshold condition. That is, when the predetermined threshold condition is updated, a predetermined threshold condition needed by a next audio segment is determined according to an audio characteristic of a current audio segment (a historical audio segment), so that an audio segment detection process is more accurate.

Optionally, in this embodiment, after the dividing a to-be-detected audio signal into a plurality of audio segments, the method may further include:

S1: Obtain first N audio segments in the plurality of audio segments, where N is an integer greater than 1.

S2: Construct a noise suppression model based on the first N audio segments, where the noise suppression model is used to perform noise suppression processing on an N+1th audio segment and audio segments thereafter in the plurality of audio segments.

S3: Obtain an initial predetermined threshold condition based on the first N audio segments.

It should be noted that, to ensure accuracy of the voice detection process, in this embodiment, noise suppression processing is performed on the plurality of audio segments, to prevent interference of a noise to a voice signal. For example, a background noise of an audio signal is eliminated in a manner of minimum mean-square error logarithm spectral amplitude estimation.

Optionally, in this embodiment, the first N audio segments may be but are not limited to audio segments without voice input. That is, before a human-computer interaction process is started, an initialization operation is performed, a noise suppression model is constructed by using the audio segments without voice input, and an initial predetermined threshold condition used to determine an audio characteristic is obtained. The initial predetermined threshold condition may be but is not limited to being determined according to an average value of audio characteristics of the first N audio segments.

Optionally, in this embodiment, before the extracting an audio characteristic in each audio segment of the plurality of audio segments, the method may further include: performing second quantization on the to-be-detected audio signal that is collected, where a quantization level of the second quantization is lower than a quantization level of the first quantization.

It should be noted that, in this embodiment, the first quantization may be but is not limited to being performed when the audio signal is collected; and the second quantization may be but is not limited to being performed after the noise suppression processing is performed. In addition, in this embodiment, a higher quantization level indicates more sensitive interference; that is, when a quantization level is relatively high, a quantization interval is relatively small, and therefore a quantization operation is performed on a relatively small noise signal. As such, a result after the quantization not only includes a voice signal, but also includes a noise signal, and therefore very large interference is introduced to voice signal detection. In this embodiment, quantization is implemented for a second time based on an adjusted quantization level, that is, the quantization level of the second quantization is less than the quantization level of the first quantization, thereby filtering a noise signal twice to reduce interference.

Optionally, in this embodiment, the dividing a to-be-detected audio signal into a plurality of audio segments may include but is not limited to: collecting the audio signal by using a sampling device with a fixed-length window. In this embodiment, a length of the fixed-length window is relatively small. For example, a length of a used window is 256 (signal quantity). That is, the audio signal is divided by using a small window, so as to return a processing result in real time, to complete real-time detection of a voice signal.

According to this embodiment provided by this application, a to-be-detected audio signal is divided into a plurality of audio segments, and an audio characteristic in each audio segment of the plurality of audio segments is extracted, where the audio characteristic includes at least a time domain characteristic and a frequency domain characteristic of the audio segment. By virtue of the solution, a plurality of characteristics of an audio segment in different domains are used to accurately detect at least one target voice segment from the plurality of audio segments, so as to reduce interference of a noise signal in the audio segments to a voice detection process, thereby increasing voice detection accuracy, and solving a problem in a related technology that detection accuracy is relatively low when voice detection is performed by using only a single characteristic.

As an optional solution, the detecting at least one target voice segment from the plurality of audio segments according to the audio characteristic of each audio segment may include:

S1: Determine whether the audio characteristic of a current audio segment satisfies a predetermined threshold condition, where the audio characteristic of the audio segment includes :

a signal zero-crossing rate of the current audio segment in a time domain, short-time energy of the current audio segment in a time domain, spectral flatness of the current audio segment in a frequency domain, and signal information entropy of the current audio segment in a time domain.

S2: When the audio characteristic of the current audio segment satisfies the predetermined threshold condition, detect that the current audio segment is a target voice segment.

Optionally, in this embodiment, audio characteristics of a current audio segment x (i) in N audio segments may be obtained by using the following formulas:

1) Calculate a signal zero-crossing rate (that is, a short-time zero-crossing rate) in a time domain:

$$Z_n = \frac{1}{2N} \sum_{i=0}^{N-1} |sgn(x(i))\text{-}sgn(x(i\text{-}1))| \quad (1)$$

where sgn[] is a symbol function:

$$sgn[x] = \begin{cases} 1 & x \geq 0 \\ -1 & x < 0 \end{cases} \quad (2)$$

2) Calculate short-time energy in a time domain:

$$E_n = \sum_{i=0}^{N-1} x^2(i)h(N-i) \quad (3)$$

where h[i] is a window function, and the following function is used:

$$h[i] = \begin{cases} 1/N & 0 \le i \le N-1 \\ 0 & i \text{ is another value} \end{cases} \quad (4)$$

3) Calculate spectral flatness in a frequency domain:

First, Fourier transformation is performed on the audio segment x(i) i = 0,1,2···,N-1 to obtain an amplitude value f(i) i = 0,1,2···,N-1 in the frequency domain.

The spectral flatness is calculated according to the following formula:

$$F_n = \frac{\sqrt[n]{\prod_{i=0}^{n-1} f(i)}}{\frac{\sum_{i-0}^{n-1} f(i)}{n}} = \frac{\exp(\frac{1}{N}\sum_{i=0}^{N-1} \ln f(i))}{\frac{1}{N}\sum_{i=0}^{N-1} f(i)} \quad (5)$$

4) Calculate signal information entropy in a time domain:
First, a value of a relative probability after a signal absolute value is normalized is calculated:

$$p(i) = \frac{|x(i)|}{\sum_{i=0}^{N-1} |x(i)|} \quad (6)$$

The signal information entropy is then calculated according to the following formula:

$$I_n = \sum_{i=0}^{N-1} p(i)\log_2 p(i) \quad (7)$$

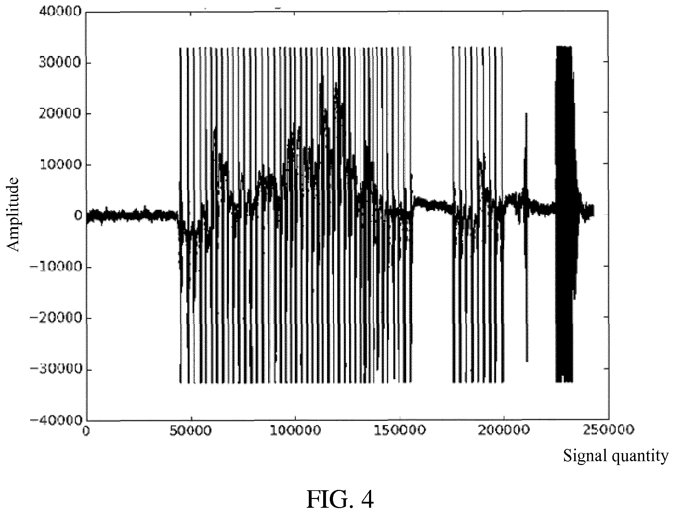

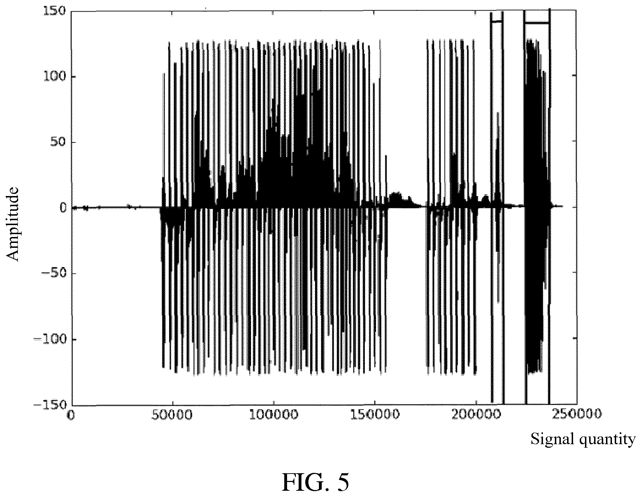

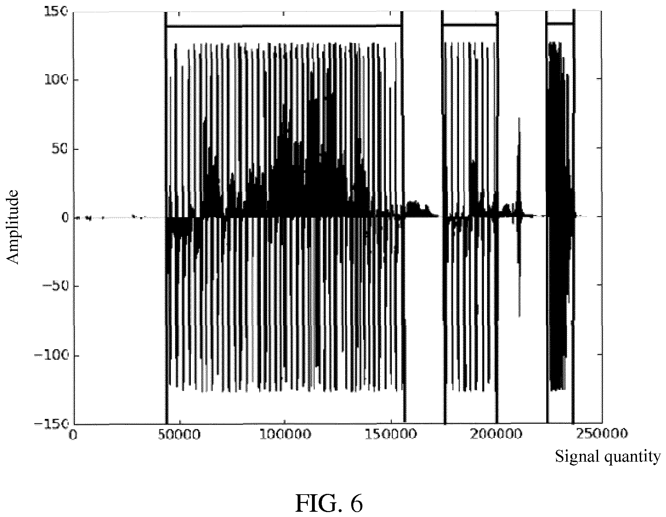

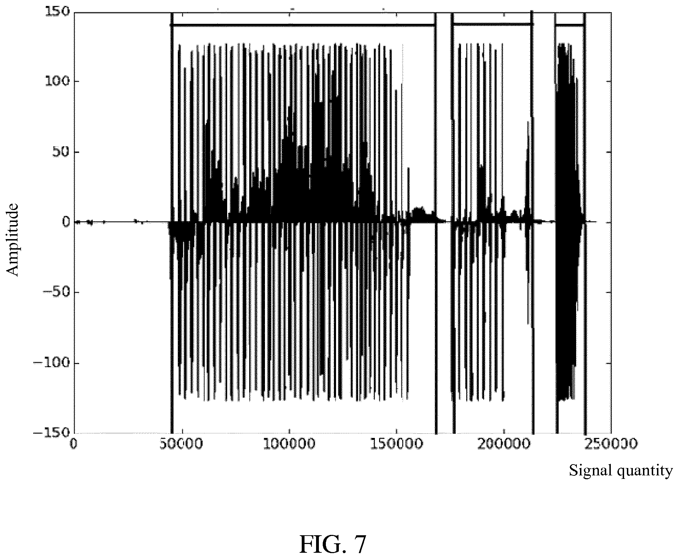

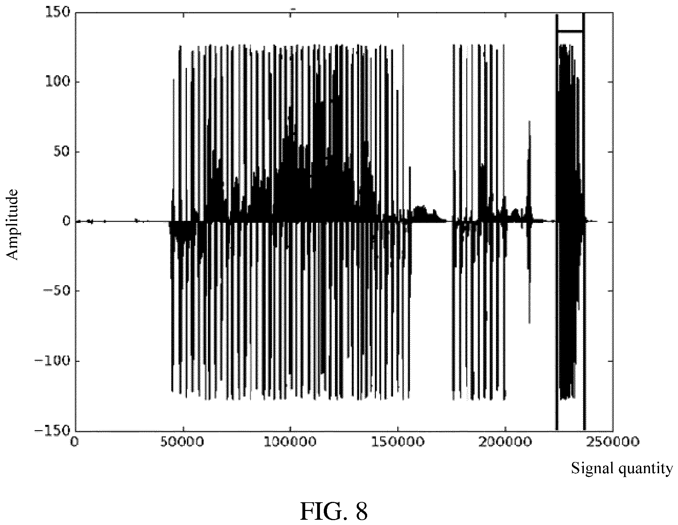

Specifically, a description is provided with reference to the following example. FIG. 4 shows original audio signals with impulse noises. There are some impulse noises in an intermediate section (signals within a range of 50000 to 150000 on the horizontal axis), and voice signals are in a last section (signals within a range of 230000 to 240000 on the horizontal axis). FIG. 5 shows audio signals for which signal zero-crossing rates are separately extracted from original audio signals. It can be seen that, an impulse noise can be well distinguished according to a characteristic of the signal zero-crossing rate. For example, impulse noises in an intermediate section (signals within a range of 50000 to 150000 on the horizontal axis) can be directly filtered out; however, low-energy non-impulse noises (signals within a range of 210000 to 220000 on the horizontal axis) cannot be distinguished. FIG. 6 shows audio signals for which short-time energy is separately extracted from original audio signals. It can be seen that, by using a characteristic of the short-time energy, low-energy non-impulse noises (signals within a range of 210000 to 220000 on the horizontal axis) can be filtered out; however, impulse noises (impulse signals also have relatively large energy) in an intermediate section (signals within a range of 50000 to 150000 on the horizontal axis) cannot be distinguished. FIG. 7 shows audio signals for which spectral flatness and signal information entropy are extracted from original audio signals. By using both the spectral flatness and the signal information entropy, both voice signals and impulse noises can be detected, and all voice like signals can be reserved to the greatest extent. Further, FIG. 8 shows a manner provided in this embodiment: based on the extraction of the spectral flatness and the signal information entropy, with reference to the characteristic of the short-time energy and the characteristic of the signal zero-crossing rate, interference from an impulse noise and other low-energy noises can be distinguished, and an actual voice signal can be detected. It can be known from the signals shown in the foregoing figures that, an audio signal extracted in this embodiment is more beneficial to accurate detection of a target voice segment.

According to this embodiment provided by this application, the plurality of characteristics in the time domain and the frequency domain are integrated into a voice detection process to resist interference from an impulse noise or a background noise, and enhance robustness, so as to accurately detect at least one target voice segment from a plurality of audio segments into which a to-be-detected audio signal is divided. Further, a starting moment and an ending moment of a voice signal corresponding to the at least one target voice segment can be accurately obtained, and therefore natural human-computer interaction can be implemented.

As an optional solution, the detecting at least one target voice segment from the plurality of audio segments according to the audio characteristic of each audio segment may include:

S1: Repeatedly perform the following steps, until a current audio segment is a last audio segment in the plurality of audio segments, where the current audio segment is initialized as a first audio segment in the plurality of audio segments:
S11: Determine whether the audio characteristic of a current audio segment satisfies a predetermined threshold condition.

S12: When the audio characteristic of the current audio segment satisfies the predetermined threshold condition, detect that the current audio segment is a target voice segment.

S13: When the audio characteristic of the current audio segment does not satisfy the predetermined threshold condition, update the predetermined threshold condition according to at least the audio characteristic of the current audio segment, to obtain an updated predetermined threshold condition.

S14: Determine whether the current audio segment is the last audio segment in the plurality of audio segments, and if the current audio segment is not the last audio segment, use a next audio segment of the current audio segment as the current audio segment.

Optionally, in this embodiment, the predetermined threshold condition may be but is not limited to being adaptively updated and adjusted according to varying scenarios. In this embodiment, when an audio segment is obtained from a plurality of audio segments according to an input sequence of an audio signal, to determine whether an audio characteristic of the audio segment satisfies a predetermined threshold condition, the predetermined threshold condition may be but is not limited to being updated according to at least an audio characteristic of a current audio segment. That is, when the predetermined threshold condition needs to be updated, a next updated predetermined threshold condition is obtained based on the current audio segment (a historical audio segment).

It should be noted that, for a to-be-detected audio signal, there are a plurality of audio segments, and the foregoing determining process is repeatedly performed for each audio segment, until the plurality of audio segments to which the to-be-detected audio signal is divided is traversed, that is, until the current audio segment is a last audio segment in the plurality of audio segments.

According to this embodiment provided by this application, the predetermined threshold condition used to compare with the audio characteristic is constantly updated, to ensure that the at least one target voice segment is accurately detected from the plurality of audio segments in a detection process according to different scenarios. Further, for a plurality of characteristics of an audio segment in a plurality of domains, whether corresponding predetermined threshold conditions are satisfied is separately determined, to perform determining and screening on the audio segment for a plurality of times, thereby ensuring that an accurate target voice segment is detected.

S1: Determining whether the audio characteristic of a current audio segment satisfies a predetermined threshold condition includes:

S11: Determine whether the signal zero-crossing rate of the current audio segment in a time domain is greater than a first threshold; when the signal zero-crossing rate of the current audio segment is greater than the first threshold, determine whether the short-time energy of the current audio segment in the time domain is greater than a second threshold; or when the short-time energy of the current audio segment is greater than the second threshold, determine whether the spectral flatness of the current audio segment in the frequency domain is less than a third threshold; and when the spectral flatness of the current audio segment in the frequency domain is less than the third threshold, determine whether the signal information entropy of the current audio segment in the time domain is less than a fourth threshold.

S2: When the audio characteristic of the current audio segment satisfies the predetermined threshold condition, detecting that the current audio segment is a target voice segment includes:

S21: When determining that the signal information entropy of the current audio segment is less than the fourth threshold, detect that the current audio segment is a target voice segment.

Optionally, in this embodiment, the process of detecting a target voice segment according to a plurality of characteristics of a current audio segment in a time domain and a frequency domain may be but is not limited to being performed after second quantization is performed on an audio signal. This is not limited in this embodiment.

It should be noted that, the audio characteristic has the following functions in a voice detection process:

1) signal zero-crossing rate: obtaining a signal zero-crossing rate of a current audio segment in a time domain, where the signal zero-crossing rate indicates a quantity of times that a waveform of an audio signal crosses the zero axis, and generally, a zero-crossing rate of a voice signal is greater than a zero-crossing rate of a non-voice signal;

2) short-time energy: obtaining time domain energy of a current audio segment in time domain amplitude, where the short-time energy is used to distinguish a non-voice signal from a voice signal in terms of signal energy, and generally, short-time energy of the voice signal is greater than short-time energy of the non-voice signal;

3) spectral flatness: performing Fourier transformation on a current audio segment and calculating spectral flatness thereof, where frequency distribution of a voice signal is relatively concentrative, and corresponding spectral flatness is relatively small; and frequency distribution of a white Gaussian noise signal is relatively dispersive, and corresponding spectral flatness is relatively large; and

4) signal information entropy: normalizing a current audio segment and then calculating signal information entropy, where distribution of a voice signal is relatively concentrative, and corresponding signal information entropy is small; and distribution of a non-voice signal, in particular, a white Gaussian noise is relatively dispersive, and corresponding signal information entropy is relatively large.

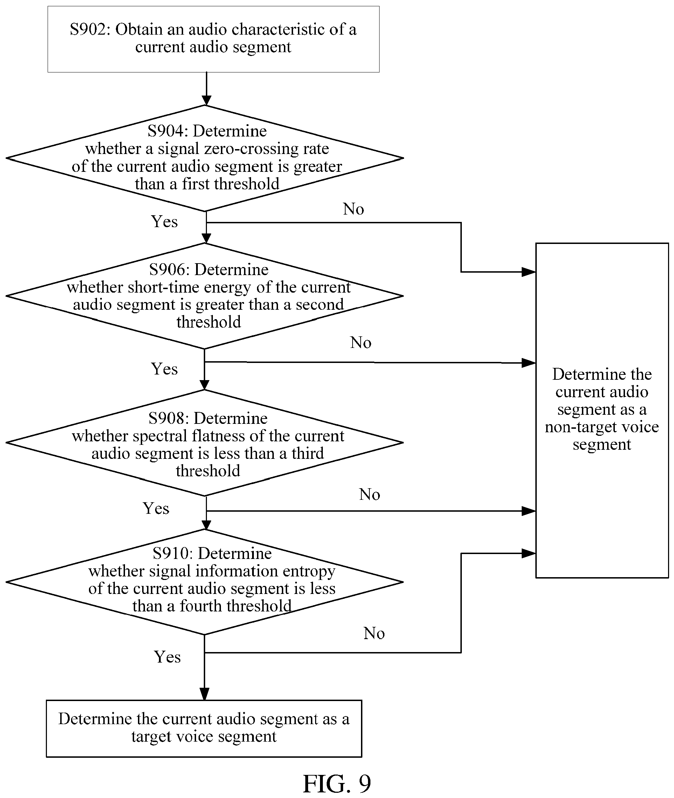

Specifically, a description is provided with reference to the example shown in FIG. 9:

S902: Obtain an audio characteristic of a current audio segment.

S904: Determine whether a signal zero-crossing rate of the current audio segment is greater than a first threshold, and if the signal zero-crossing rate of the current audio segment is greater than the first threshold, perform a next operation; or if the signal zero-crossing rate of the current audio segment is less than or equal to the first threshold, directly determine the current audio segment as a non-target voice segment.

S906: Determine whether short-time energy of the current audio segment is greater than a second threshold, and if the short-time energy of the current audio segment is greater than the second threshold, perform a next step of determining; or if the short-time energy of the current audio segment is less than or equal to the second threshold, directly determine the current audio segment as a non-target voice segment, and update the second threshold according to the short-time energy of the current audio segment.

S908: Determine whether spectral flatness of the current audio segment is less than a third threshold, and if the spectral flatness of the current audio segment is less than the third threshold, perform a next step of determining; or if the spectral flatness of the current audio segment is greater than or equal to the third threshold, directly determine the current audio segment as a non-target voice segment, and update the third threshold according to the spectral flatness of the current audio segment.

S910: Determine whether signal information entropy of the current audio segment is less than a fourth threshold, and if the signal information entropy of the current audio segment is less than the fourth threshold, perform a next step of determining; or if the signal information entropy of the current audio segment is greater than or equal to the fourth threshold, directly determine the current audio segment as a non-target voice segment, and update the fourth threshold according to the spectral flatness of the current audio segment.

After step S910 is complete, when it is determined that all of the four characteristics satisfy the corresponding predetermined threshold conditions, the current audio segment is determined as a target voice segment.

According to this embodiment provided by this application, at least one target voice segment is accurately detected from the plurality of audio segments by using a plurality of characteristics of an audio segment in different domains, thereby reducing interference of a noise signal in the audio segment to a voice detection process and increasing voice detection accuracy.

As an optional solution, the updating the predetermined threshold condition according to at least the audio characteristic of the current audio segment may include:

1) when the short-time energy of the current audio segment is less than or equal to the second threshold, updating the second threshold according to at least the short-time energy of the current audio segment; or

2) when the spectral flatness of the current audio segment is greater than or equal to the third threshold, updating the third threshold according to at least the spectral flatness of the current audio segment; or

3) when the signal information entropy of the current audio segment is greater than or equal to the fourth threshold, updating the fourth threshold according to at least the signal information entropy of the current audio segment.

Optionally, in this embodiment, the updating the predetermined threshold condition according to at least the audio characteristic of the current audio segment may include:

$$A = a \times A' + (1 - a) \times B \quad (8)$$

where, a represents an attenuation coefficient, and when B represents the short-time energy of the current audio segment, A' represents the second threshold, and A represents the updated second threshold; when B represents the spectral flatness of the current audio segment, A' represents the third threshold, and A represents the updated third threshold; or when B represents the signal information entropy of the current audio segment, A' represents the fourth threshold, and A represents the updated fourth threshold.

That is, when the predetermined threshold condition is updated, a predetermined threshold condition needed by a next audio segment is determined according to an audio characteristic of a current audio segment (a historical audio segment), so that a target voice detection process is more accurate.

According to this embodiment provided by this application, the predetermined threshold condition used to compare with the audio characteristic is constantly updated, to ensure that the at least one target voice segment is accurately detected from the plurality of audio segments in a detection process according to different scenarios.

As an optional solution, after the detecting at least one target voice segment from the plurality of audio segments according to the audio characteristic of each audio segment, the method may further include:

S1: Determine, according to a location of the at least one target voice segment in the plurality of audio segments, a starting moment and an ending moment of a continuous voice segment formed by the at least one target voice segment.

Optionally, in this embodiment, the voice segment may include but is not limited to: one target voice segment or a plurality of consecutive target voice segments. Each target voice segment includes a starting moment of the target voice segment and an ending moment of the target voice segment.

It should be noted that, in this embodiment, when at least one target voice segment is detected from the plurality of audio segments, a starting moment and an ending moment of a voice segment formed by the at least one target voice segment may be obtained according to a time label of the target voice segment, for example, the starting moment of the target voice segment and the ending moment of the target voice segment.

Optionally, in this embodiment, the determining, according to a location of the at least one target voice segment in the plurality of audio segments, a starting moment and an ending moment of a continuous voice segment formed by the at least one target voice segment may include:

S1: Obtain a starting moment of a first target voice segment in K consecutive target voice segments, and use the starting moment of the first target voice segment as the starting moment of the continuous voice segment.

S2: After the starting moment of the continuous voice segment is confirmed, obtain a starting moment of a first non-target voice segment in M consecutive non-target voice segments after a Kth target voice segment, and use the starting moment of the first non-target voice segment as the ending moment of the continuous voice segment.

Optionally, in this embodiment, K is an integer greater than or equal to 1, and M may be set to different values according to different scenarios. This is not limited in this embodiment.

Specifically, a description is provided with reference to the following example. It is assumed that, target voice segments detected from a plurality of (for example, 20) audio segments (it is assumed that each duration is T) include P1 to P5, P7 to P8, P10, and P17 to P20. Further, it is assumed that M is 5.

It can be known based on the foregoing assumptions that, the first five target voice segments are consecutive, there is a non-target voice segment (that is, P6) between P5 and P7, there is a non-target voice segment (that is, P9) between P8 and P10, and there are six non-target voice segments (that is, P11 to P16) between P10 and P17.

It can be confirmed according to first K (that is, first five) consecutive target voice segments that: a voice segment A including a voice signal is detected from a to-be-detected audio signal, where a starting moment of the voice segment A is a starting moment (that is, a starting moment of P1) of a first target voice segment in the first five target voice segments. Further, a quantity of non-target voice segments between P5 and P7 is 1, that is, less than M (M=5), and a quantity of non-target voice segments between P8 and P10 is 1, that is, less than M (M=5). Therefore, it can be determined that, the foregoing voice segment A is not ended at the non-target voice segment P6 and the non-target voice segment P9. A quantity of non-target voice segments between P10 and P17 is 6, that is, greater than M (M=5), that is, a quantity of consecutive non-target voice segments (P11 to P16) already satisfies M preset thresholds. Therefore, it can be determined that the voice segment A is ended at a starting moment (that is, a starting moment of P11) of a first non-target voice segment in the consecutive non-target voice segments (that is, P11 to P16), and then the starting moment of P11 is used as an ending moment of the voice segment A. That is, the starting moment of the voice segment A is a starting moment 0 of P1, and the ending moment is a starting moment 10T of P11.

Herein, it should be noted that, in this example, the foregoing consecutive target voice segments P17 to P20 are used to determine a detection process of a next voice segment B. The detection process may be performed by referring to the foregoing process, and details are not described herein again in this embodiment.

In addition, in this embodiment, a to-be-detected audio signal may be but is not limited to being obtained in real time, so as to detect whether an audio segment in an audio signal is a target voice segment, thereby accurately detecting a starting moment of a voice segment formed by the at least one target voice segment and an ending moment of the voice segment formed by the at least one target voice segment. As such, a human-computer interaction device can accurately reply after obtaining complete voice information that needs to be expressed by the voice segment, so as to implement human-computer interaction. It should be noted that, in a process of obtaining the to-be-detected audio signal in real time, voice detection may be but is not limited to repeatedly performing the foregoing detection steps. In this embodiment, details are not described herein again.

According to this embodiment provided by this application, when the at least one target voice segment is accurately detected, a human-computer interaction device can quickly determine, in real time, a starting moment and an ending moment of a voice segment formed by the at least one target voice segment, so that the human-computer interaction device can accurately respond, in real time, to voice information obtained by means of detection, and an effect of natural human-computer interaction is achieved. In addition, by accurately detecting the starting moment and the ending moment of the voice signal corresponding to the at least one target voice segment, the human-computer interaction device also achieves an effect of increasing human-computer interaction efficiency, and solves a problem in a related technology that the human-computer interaction efficiency is relatively low because an interaction person needs to press a control button to trigger and start a human-computer interaction process.

As an optional solution, after the dividing a to-be-detected audio signal into a plurality of audio segments, the method may further include:

S1: Obtain first N audio segments in the plurality of audio segments, where N is an integer greater than 1.

S2: Construct a noise suppression model based on the first N audio segments, where the noise suppression model is used to perform noise suppression processing on an N+1th audio segment and audio segments thereafter in the plurality of audio segments.

S3: Obtain an initial predetermined threshold condition based on the first N audio segments.

For example, specifically, a noise suppression model is constructed according to first N audio segments in the following manner. It is assumed that an audio signal includes a pure voice signal and an independent white Gaussian noise. Then, noise suppression may be performed in the following manner: Fourier transformation is performed on background noises of the first N audio segments, to obtain signal frequency domain information; a frequency domain logarithm spectral characteristic of the noises is estimated according to the frequency domain information of the Fourier transformation, to construct the noise suppression model. Further, for an N+1th audio segment and audio segments thereafter, it may be but is not limited to performing noise elimination processing on audio signals based on the noise suppression model and by using a maximum likelihood estimation method.

For another example, before a human-computer interaction process is started, an initialization operation is performed, a noise suppression model is constructed by using the audio segments without voice input, and an initial predetermined threshold condition used to determine an audio characteristic is obtained. The initial predetermined threshold condition may be but is not limited to being determined according to an average value of audio characteristics of the first N audio segments.

According to this embodiment provided by this application, an initialization operation of human-computer interaction is implemented by using first N audio segments in a plurality of audio segments. For example, a noise suppression model is constructed, to perform noise suppression processing on the plurality of audio segments, preventing interference of a noise to a voice signal. For example, an initial predetermined threshold condition used to determine an audio characteristic is obtained, so as to perform voice detection on the plurality of audio segments.

As an optional solution, before the extracting an audio characteristic in each audio segment of the plurality of audio segments, the method may further include:

S1: Collect the to-be-detected audio signal, where first quantization is performed on the to-be-detected audio signal when the to-be-detected audio signal is collected.

S2: Perform second quantization on the to-be-detected audio signal that is collected, where a quantization level of the second quantization is lower than a quantization level of the first quantization.

It should be noted that, in this embodiment, the first quantization may be but is not limited to being performed when the audio signal is collected; and the second quantization may be but is not limited to being performed after the noise suppression processing is performed. In addition, in this embodiment, a higher quantization level indicates more sensitive interference; that is, smaller interference indicates easier interference to a voice signal, and interference is implemented for a second time based on an adjusted quantization level, to achieve an effect of filtering out the interference twice.

Specifically, a description is provided with reference to the following example. For example, during first quantization, 16 bits are used, and during second quantization, 8 bits are used, that is, a range of [-128 to -127], thereby accurately distinguishing a voice signal from a noise by means of filtering for a second time.

It should be noted that, according to the foregoing method embodiments, for brief descriptions, the method embodiments are described as a combination of a series of actions. However, a person skilled in the art should know that, the present disclosure is not limited by an action sequence that is described, because some steps may be performed in another sequence or simultaneously according to the present disclosure. In addition, a person skilled in the art should also know that all the embodiments described in this specification are preferred embodiments, and the related actions and modules are not necessarily required in the present disclosure.

According to the foregoing descriptions of implementations, the person skilled in the art may clearly know that the method according to the foregoing embodiments may be implemented by using software and a necessary general hardware platform, or certainly may be implemented by using hardware. However, in most cases, the former is a preferred implementation. Based on such an understanding, the technical solutions of the present invention essentially, or the part contributing to a related technology may be implemented in a form of a software product. The computer software product is stored in a storage medium (such as a ROM/RAM, a magnetic disk, or an optical disc) and includes several instructions for instructing a terminal device (which may be a mobile phone, a computer, a server, a network device, or the like) to perform the methods described in the embodiments of the present invention.

Embodiment 2

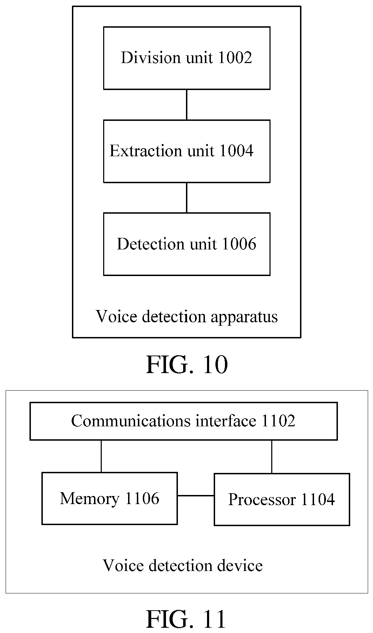

According to an embodiment of the present invention, a voice detection apparatus used to implement the voice detection method is provided. As shown in FIG. 10, the apparatus includes:

1) a division unit 1002, configured to divide a to-be-detected audio signal into a plurality of audio segments;

2) an extraction unit 1004, configured to extract an audio characteristic in each audio segment of the plurality of audio segments, where the audio characteristic includes at least a time domain characteristic and a frequency domain characteristic of the audio segment; and

3) a detection unit 1006, configured to detect at least one target voice segment from the plurality of audio segments according to the audio characteristic of each audio segment.

Optionally, in this embodiment, the voice detection apparatus may be but is not limited to being applied to at least one of the following scenarios: an intelligent robot chat system, an automatic question-answering system, human-computer chat software, or the like. That is, in a process of applying the voice detection apparatus provided in this embodiment to human-computer interaction, an audio characteristic, which includes at least characteristics of an audio segment in a time domain and a frequency domain, is extracted from the audio segment, so that at least one target voice segment can be accurately detected from a plurality of audio segments into which a to-be-detected audio signal is divided. As such, a device used for human-computer interaction can learn a starting moment and an ending moment of a voice segment formed by the at least one target voice segment, and the device can accurately reply after obtaining complete voice information that a user wants to express. Herein, in this embodiment, the voice segment may include but is not limited to: one target voice segment or a plurality of consecutive target voice segments. Each target voice segment includes a starting moment and an ending moment of the target voice segment. This is not limited in this embodiment.

It should be noted that, in this embodiment, by means of a human-computer interaction device, a to-be-detected audio signal is divided into a plurality of audio segments, and an audio characteristic in each audio segment of the plurality of audio segments is extracted, where the audio characteristic includes at least a time domain characteristic and a frequency domain characteristic of the audio segment. By virtue of the solution, a plurality of characteristics of an audio segment in different domains are used to accurately detect at least one target voice segment from the plurality of audio segments, so as to reduce interference of a noise signal in the audio segments to a voice detection process, thereby increasing voice detection accuracy, and solving a problem in a related technology that detection accuracy is relatively low when voice detection is performed by using only a single characteristic.

In addition, when the at least one target voice segment is accurately detected, a human-computer interaction device can quickly determine, in real time, a starting moment and an ending moment of a voice segment formed by the at least one target voice segment, so that the human-computer interaction device can accurately respond, in real time, to voice information obtained by means of detection, and an effect of natural human-computer interaction is achieved. In addition, by accurately detecting the starting moment and the ending moment of the voice segment formed by the at least one target voice segment, the human-computer interaction device also achieves an effect of increasing human-computer interaction efficiency, and solves a problem in a related technology that the human-computer interaction efficiency is relatively low because an interaction person needs to press a control button to trigger and start a human-computer interaction process.

The audio characteristic includes the following: a signal zero-crossing rate in a time domain, short-time energy in a time domain, spectral flatness in a frequency domain, and signal information entropy in a time domain, and optionally at least one of a self-correlation coefficient, a signal after wavelet transform, signal complexity, or the like.

It should be noted that, 1) the signal zero-crossing rate may be but is not limited to being used to eliminate interference from some impulse noises; 2) the short-time energy may be but is not limited to being used to measure an amplitude value of the audio signal, and eliminate interference from speech voices of an unrelated population with reference to a threshold; 3) the spectral flatness may be but is not limited to being used to calculate, within a frequency domain, a signal frequency distribution characteristic, and determine whether the audio signal is a background white Gaussian noise according to a value of the characteristic; 4) the signal information entropy in the time domain may be but is not limited to being used to measure an audio signal distribution characteristic in the time domain, and the characteristic is used to distinguish a voice signal from a common noise. In this embodiment, the plurality of characteristics in the time domain and the frequency domain are integrated into a voice detection process to resist interference from an impulse noise or a background noise, and enhance robustness, so as to accurately detect at least one target voice segment from a plurality of audio segments into which a to-be-detected audio signal is divided. Further, a starting moment and an ending moment of a voice segment formed by the at least one target voice segment can be accurately obtained, and therefore natural human-computer interaction can be implemented.

Optionally, in this embodiment, a manner of detecting at least one target voice segment from a plurality of audio segments in an audio signal according to an audio characteristic of an audio segment may include but is not limited to: determining whether the audio characteristic of the audio segment satisfies a predetermined threshold condition; when the audio characteristic of the audio segment satisfies the predetermined threshold condition, detecting that the audio segment is a target voice segment.

It should be noted that, in this embodiment, when determining whether the audio characteristic of the audio segment satisfies the predetermined threshold condition, a current audio segment used for the determining may be obtained from the plurality of audio segments according to at least one of the following sequences: 1) according to an input sequence of the audio signal; 2) according to a predetermined sequence. The predetermined sequence may be a random sequence, or may be a sequence arranged according to a predetermined rule, for example, according to a sequence of sizes of the audio segments. The foregoing is only an example, and this is not limited in this embodiment.

In addition, in this embodiment, the predetermined threshold condition may be but is not limited to being adaptively updated and adjusted according to varying scenarios. The predetermined threshold condition used to compare with the audio characteristic is constantly updated, to ensure that the at least one target voice segment is accurately detected from the plurality of audio segments in a detection process according to different scenarios. Further, for a plurality of characteristics of an audio segment in a plurality of domains, whether corresponding predetermined threshold conditions are satisfied is separately determined, to perform determining and screening on the audio segment for a plurality of times, thereby ensuring that a target voice segment is accurately detected.

Optionally, in this embodiment, when an audio segment is obtained from a plurality of audio segments according to an input sequence of an audio signal, to determine whether an audio characteristic of the audio segment satisfies a predetermined threshold condition, the detecting at least one target voice segment from the plurality of audio segments according to the audio characteristic of each audio segment may include: repeatedly performing the following steps, until a current audio segment is a last audio segment in the plurality of audio segments, where the current audio segment is initialized as a first audio segment in the plurality of audio segments:

S1: Determine whether the audio characteristic of a current audio segment satisfies a predetermined threshold condition.

S2: When the audio characteristic of the current audio segment satisfies the predetermined threshold condition, detect that the current audio segment is a target voice segment.

S3: When the audio characteristic of the current audio segment does not satisfy the predetermined threshold condition, update the predetermined threshold condition according to at least the audio characteristic of the current audio segment, to obtain an updated predetermined threshold condition.

S4: Determine whether the current audio segment is the last audio segment in the plurality of audio segments, and if the current audio segment is not the last audio segment, use a next audio segment of the current audio segment as the current audio segment.

It should be noted that, in this embodiment, the predetermined threshold condition may be but is not limited to being updated according to at least an audio characteristic of a current audio segment, to obtain an updated predetermined threshold condition. That is, when the predetermined threshold condition is updated, a predetermined threshold condition needed by a next audio segment is determined according to an audio characteristic of a current audio segment (a historical audio segment), so that an audio segment detection process is more accurate.

Optionally, in this embodiment, the apparatus may further include:

1) a first obtaining unit, configured to: after the to-be-detected audio signal is divided into the plurality of audio segments, obtain first N audio segments in the plurality of audio segments, where N is an integer greater than 1;

2) a construction unit, configured to construct a noise suppression model based on the first N audio segments, where the noise suppression model is used to perform noise suppression processing on an $N+1^{th}$ audio segment and audio segments thereafter in the plurality of audio segments; and

3) a second obtaining unit, configured to obtain an initial predetermined threshold condition based on the first N audio segments.

It should be noted that, to ensure accuracy of the voice detection process, in this embodiment, noise suppression processing is performed on the plurality of audio segments, to prevent interference of a noise to a voice signal. For example, a background noise of an audio signal is eliminated in a manner of minimum mean-square error logarithm spectral amplitude estimation.

Optionally, in this embodiment, the first N audio segments may be but are not limited to audio segments without voice input. That is, before a human-computer interaction process is started, an initialization operation is performed, a noise suppression model is constructed by using the audio segments without voice input, and an initial predetermined threshold condition used to determine an audio characteristic is obtained. The initial predetermined threshold condition may be but is not limited to being determined according to an average value of audio characteristics of the first N audio segments.

Optionally, in this embodiment, before the extracting an audio characteristic in each audio segment of the plurality of audio segments, the method may further include: performing second quantization on the to-be-detected audio signal that is collected, where a quantization level of the second quantization is lower than a quantization level of the first quantization.

It should be noted that, in this embodiment, the first quantization may be but is not limited to being performed when the audio signal is collected; and the second quantization may be but is not limited to being performed after the noise suppression processing is performed. In addition, in this embodiment, a higher quantization level indicates more sensitive interference; that is, when a quantization level is relatively high, a quantization interval is relatively small, and therefore a quantization operation is performed on a relatively small noise signal. As such, a result after the quantization not only includes a voice signal, but also includes a noise signal, and therefore very large interference is introduced to voice signal detection. In this embodiment, quantization is implemented for a second time based on an adjusted quantization level, that is, the quantization level of the second quantization is less than the quantization level of the first quantization, thereby filtering a noise signal twice to reduce interference.

Optionally, in this embodiment, the dividing a to-be-detected audio signal into a plurality of audio segments may include but is not limited to: collecting the audio signal by using a sampling device with a fixed-length window. In this embodiment, a length of the fixed-length window is relatively small. For example, a length of a used window is 256 (signal quantity). That is, the audio signal is divided by using a small window, so as to return a processing result in real time, to complete real-time detection of a voice signal.

According to this embodiment provided by this application, a to-be-detected audio signal is divided into a plurality of audio segments, and an audio characteristic in each audio segment of the plurality of audio segments is extracted, where the audio characteristic includes at least a time domain characteristic and a frequency domain characteristic of the audio segment. By virtue of the solution, a plurality of characteristics of an audio segment in different domains are used to accurately detect at least one target voice segment from the plurality of audio segments, so as to reduce interference of a noise signal in the audio segments to a voice detection process, thereby increasing voice detection accuracy, and solving a problem in a related technology that detection accuracy is relatively low when voice detection is performed by using only a single characteristic.

The detection unit 1006 includes:

1) a judgment module, configured to determine whether the audio characteristic of a current audio segment satisfies a predetermined threshold condition, where the audio characteristic of the audio segment includes:
a signal zero-crossing rate of the current audio segment in a time domain, short-time energy of the current audio segment in a time domain, spectral flatness of the current audio segment in a frequency domain, and signal information entropy of the current audio segment in a time domain; and
2) a detection module, configured to: when the audio characteristic of the current audio segment satisfies the predetermined threshold condition, detect that the current audio segment is a target voice segment.

Optionally, in this embodiment, an audio characteristic of a current audio segment x (i) in N audio segments may be obtained by using the following formulas:

1) Calculate a signal zero-crossing rate (that is, a short-time zero-crossing rate) in a time domain:

$$Z_n = \frac{1}{2N} \sum_{i=0}^{N-1} |sgn(x(i)) - sgn(x(i-1))| \quad (1)$$

where sgn[] is a symbol function:

$$sgn[x] = \begin{cases} 1 & x \geq 0 \\ -1 & x < 0 \end{cases} \quad (2)$$

2) Calculate short-time energy in a time domain:

$$E_n = \sum_{i=0}^{N-1} x^2(i) h(N-i) \quad (3)$$

where h[i] is a window function, and the following function is used:

$$h[i] = \begin{cases} 1/N & 0 \leq i \leq N-1 \\ 0 & i \text{ is another value} \end{cases} \quad (4)$$

3) Calculate spectral flatness in a frequency domain:

First, Fourier transformation is performed on the audio segment x(i) i = 0,1,2···,N-1 to obtain an amplitude value f (i) i = 0,1,2···,N-10,1,2···,N-1 in the frequency domain.

The spectral flatness is calculated according to the following formula:

$$F_n = \frac{\sqrt[n]{\prod_{i=0}^{n-1} f(i)}}{\frac{\sum_{i=0}^{n-1} f(i)}{n}} = \frac{\exp(\frac{1}{N}\sum_{i=0}^{N-1} \ln f(i))}{\frac{1}{N}\sum_{i=0}^{N-1} f(i)} \quad (5)$$

4) Calculate signal information entropy in a time domain:

First, a value of a relative probability after a signal absolute value is normalized is calculated:

$$p(i) = \frac{|x(i)|}{\sum_{i=0}^{N-1} |x(i)|} \quad (6)$$

The signal information entropy is then calculated according to the following formula:

$$I_n = \sum_{i=0}^{N-1} p(i) \log_2 p(i) \quad (7)$$

Specifically, a description is provided with reference to the following example. FIG. 4 shows original audio signals with impulse noises. There are some impulse noises in an intermediate section (signals within a range of 50000 to 150000 on the horizontal axis), and voice signals are in a last section (signals within a range of 230000 to 240000 on the horizontal axis). FIG. 5 shows audio signals for which signal zero-crossing rates are separately extracted from original audio signals. It can be seen that, an impulse noise can be well distinguished according to a characteristic of the signal zero-crossing rate. For example, impulse noises in an intermediate section (signals within a range of 50000 to 150000 on the horizontal axis) can be directly filtered out; however, low-energy non-impulse noises (signals within a range of 210000 to 220000 on the horizontal axis) cannot be distinguished. FIG. 6 shows audio signals for which short-time energy is separately extracted from original audio signals. It can be seen that, by using a characteristic of the short-time energy, low-energy non-impulse noises (signals within a range of 210000 to 220000 on the horizontal axis) can be filtered out; however, impulse noises (impulse signals also have relatively large energy) in an intermediate section (signals within a range of 50000 to 150000 on the horizontal axis) cannot be distinguished. FIG. 7 shows audio signals for which spectral flatness and signal information entropy are extracted from original audio signals. By using both the spectral flatness and the signal information entropy, both voice signals and impulse noises can be detected, and all voice like signals can be reserved to the greatest extent. Further, in addition, FIG. 8 shows a manner provided in this embodiment: based on the extraction of the spectral flatness and the signal information entropy, the short-time energy, the foregoing four characteristics, and the characteristic of the signal zero-crossing rate are extracted for audio signals, so that interference from an impulse noise and other low-energy noises can be distinguished, and an actual voice signal can be detected. It can be known from the signals shown in the foregoing figures that, an audio signal extracted in this embodiment is more beneficial to accurate detection of a target voice segment.

According to this embodiment provided by this application, the plurality of characteristics in the time domain and the frequency domain are integrated into a voice detection process to resist interference from an impulse noise or a background noise, and enhance robustness, so as to accurately detect at least one target voice segment from a plurality of audio segments into which a to-be-detected audio signal is divided. Further, a starting moment and an ending moment of a voice signal corresponding to the at least one target voice segment can be accurately obtained, and therefore natural human-computer interaction can be implemented.

As an optional solution, the detection unit 1006 includes a judgment module and a detection module.

1) The judgment module is configured to repeatedly perform the following steps, until a current audio segment is a last audio segment in the plurality of audio segments, where the current audio segment is initialized as a first audio segment in the plurality of audio segments:

S1: Determine whether the audio characteristic of a current audio segment satisfies a predetermined threshold condition.

S2: When the audio characteristic of the current audio segment satisfies the predetermined threshold condition, detect that the current audio segment is a target voice segment.

S3: When the audio characteristic of the current audio segment does not satisfy the predetermined threshold condition, update the predetermined threshold condition according to at least the audio characteristic of the current audio segment, to obtain an updated predetermined threshold condition.

S4: Determine whether the current audio segment is the last audio segment in the plurality of audio segments, and if the current audio segment is not the last audio segment, use a next audio segment of the current audio segment as the current audio segment.

Optionally, in this embodiment, the predetermined threshold condition may be but is not limited to being adaptively updated and adjusted according to varying scenarios. In this embodiment, when an audio segment is obtained from a plurality of audio segments according to an input sequence of an audio signal, to determine whether an audio characteristic of the audio segment satisfies a predetermined threshold condition, the predetermined threshold condition may be but is not limited to being updated according to at least an audio characteristic of a current audio segment. That is, when the predetermined threshold condition needs to be updated, a next updated predetermined threshold condition is obtained based on the current audio segment (a historical audio segment).

It should be noted that, for a to-be-detected audio signal, there are a plurality of audio segments, and the foregoing determining process is repeatedly performed for each audio segment, until the plurality of audio segments to which the to-be-detected audio signal is divided is traversed, that is, until the current audio segment is a last audio segment in the plurality of audio segments.

According to this embodiment provided by this application, the predetermined threshold condition used to compare with the audio characteristic is constantly updated, to ensure that the at least one target voice segment is accurately detected from the plurality of audio segments in a detection process according to different scenarios. Further, for a plurality of characteristics of an audio segment in a plurality of domains, whether corresponding predetermined threshold conditions are satisfied is separately determined, to perform determining and screening on the audio segment for a plurality of times, thereby ensuring that an accurate target voice segment is detected.

As an optional solution:

1) The judgment module may include: (1) a judgment submodule, configured to: determine whether the signal zero-crossing rate of the current audio segment in a time domain is greater than a first threshold; when the signal zero-crossing rate of the current audio segment is greater than the first threshold, determine whether the short-time energy of the current audio segment in the time domain is greater than a second threshold; when the short-time energy of the current audio segment is greater than the second threshold, determine whether the spectral flatness of the current audio segment in the frequency domain is less than a third threshold; and when the spectral flatness of the current audio segment in the frequency domain is less than the third threshold, determine whether the signal information entropy of the current audio segment in the time domain is less than a fourth threshold.

2) The detection module may include: (1) a detection submodule, configured to: when determining that the signal information entropy of the current audio segment is less than the fourth threshold, detect that the current audio segment is a target voice segment.

Optionally, in this embodiment, the process of detecting a target voice segment according to a plurality of characteristics of a current audio segment in a time domain and a frequency domain may be but is not limited to being performed after second quantization is performed on an audio signal. This is not limited in this embodiment.

It should be noted that, the audio characteristic has the following functions in a voice detection process:

1) signal zero-crossing rate: obtaining a signal zero-crossing rate of a current audio segment in a time domain, where the signal zero-crossing rate indicates a quantity of times that a waveform of an audio signal crosses the zero axis, and generally, a zero-crossing rate of a voice signal is greater than a zero-crossing rate of a non-voice signal;

2) short-time energy: obtaining time domain energy of a current audio segment in time domain amplitude, where the short-time energy is used to distinguish a non-voice signal from a voice signal in terms of signal energy, and generally, short-time energy of the voice signal is greater than short-time energy of the non-voice signal;

3) spectral flatness: performing Fourier transformation on a current audio segment and calculating spectral flatness thereof, where frequency distribution of a voice signal is relatively concentrative, and corresponding spectral flatness is relatively small; and frequency distribution of a white Gaussian noise signal is relatively dispersive, and corresponding spectral flatness is relatively large; and

4) signal information entropy: normalizing a current audio segment and then calculating signal information entropy, where distribution of a voice signal is relatively concentrative, and corresponding signal information entropy is small; and distribution of a non-voice signal, in particular, a white Gaussian noise is relatively dispersive, and corresponding signal information entropy is relatively large.

Specifically, a description is provided with reference to the example shown in FIG. 9:

S902: Obtain an audio characteristic of a current audio segment.

S904: Determine whether a signal zero-crossing rate of the current audio segment is greater than a first threshold, and if the signal zero-crossing rate of the current audio segment is greater than the first threshold, perform a next operation; or if the signal zero-crossing rate of the current audio segment is less than or equal to the first threshold, directly determine the current audio segment as a non-target voice segment.

S906: Determine whether short-time energy of the current audio segment is greater than a second threshold, and if the short-time energy of the current audio segment is greater than the second threshold, perform a next step of determining; or if the short-time energy of the current audio segment is less than or equal to the second threshold, directly determine the current audio segment as a non-target voice segment, and update the second threshold according to the short-time energy of the current audio segment.

S908: Determine whether spectral flatness of the current audio segment is less than a third threshold, and if the spectral flatness of the current audio segment is less than the third threshold, perform a next step of determining; or if the spectral flatness of the current audio segment is greater than or equal to the third threshold, directly determine the current audio segment as a non-target voice segment, and update the third threshold according to the spectral flatness of the current audio segment.

S910: Determine whether signal information entropy of the current audio segment is less than a fourth threshold, and if the signal information entropy of the current audio segment is less than the fourth threshold, perform a next step of determining; or if the signal information entropy of the current audio segment is greater than or equal to the fourth threshold, directly determine the current audio segment as a non-target voice segment, and update the fourth threshold according to the spectral flatness of the current audio segment.

After step S910 is complete, when it is determined that all of the four characteristics satisfy the corresponding predetermined threshold conditions, the current audio segment is determined as a target voice segment.

According to this embodiment provided by this application, at least one target voice segment is accurately detected from the plurality of audio segments by using a plurality of characteristics of an audio segment in different domains, thereby reducing interference of a noise signal in the audio segment to a voice detection process and increasing voice detection accuracy.

As an optional solution, the judgment module implements the updating the predetermined threshold condition according to at least the audio characteristic of the current audio segment, by performing the following steps, including:

1) when the short-time energy of the current audio segment is less than or equal to the second threshold, updating the second threshold according to at least the short-time energy of the current audio segment; or

2) when the spectral flatness of the current audio segment is greater than or equal to the third threshold, updating the third threshold according to at least the spectral flatness of the current audio segment; or

3) when the signal information entropy of the current audio segment is greater than or equal to the fourth threshold, updating the fourth threshold according to at least the signal information entropy of the current audio segment.

Optionally, in this embodiment, the judgment module implements the updating the predetermined threshold condition according to at least the audio characteristic of the current audio segment, by performing the following steps, including:

$$A = a \times A' + (1 - a) \times B \quad (8)$$

where, a represents an attenuation coefficient, and when B represents the short-time energy of the current audio segment, A' represents the second threshold, and A represents the updated second threshold; when B represents the spectral flatness of the current audio segment, A' represents the third threshold, and A represents the updated third threshold; or when B represents the signal information entropy of the current audio segment, A' represents the fourth threshold, and A represents the updated fourth threshold.

That is, when the predetermined threshold condition is updated, a predetermined threshold condition needed by a next audio segment is determined according to an audio characteristic of a current audio segment (a historical audio segment), so that a target voice detection process is more accurate.

According to this embodiment provided by this application, the predetermined threshold condition used to compare with the audio characteristic is constantly updated, to ensure that the at least one target voice segment is accurately detected from the plurality of audio segments in a detection process according to different scenarios.

As an optional solution, the apparatus may further include:

1) a determining unit, configured to: after at least one target voice segment is detected from the plurality of audio segments according to the audio characteristic of each audio segment, determine, according to a location of the at least one target voice segment in the plurality of audio segments, a starting moment and an ending moment of a continuous voice segment formed by the at least one target voice segment.

Optionally, in this embodiment, the voice segment may include but is not limited to: one target voice segment or a plurality of consecutive target voice segments. Each target voice segment includes a starting moment of the target voice segment and an ending moment of the target voice segment.

It should be noted that, in this embodiment, when at least one target voice segment is detected from the plurality of audio segments, a starting moment and an ending moment of a voice segment formed by the at least one target voice segment may be obtained according to a time label of the target voice segment, for example, the starting moment of the target voice segment and the ending moment of the target voice segment.

Optionally, in this embodiment, the determining unit may include:

1) a first obtaining module, configured to: obtain a starting moment of a first target voice segment in K consecutive target voice segments, and use the starting moment of the first target voice segment as the starting moment of the continuous voice segment; and

2) a second obtaining module, configured to: after the starting moment of the continuous voice segment is confirmed, obtain a starting moment of a first non-target voice segment in M consecutive non-target voice segments after a $K^{th}$ target voice segment, and use the starting moment of the first non-target voice segment as the ending moment of the continuous voice segment.

Optionally, in this embodiment, K is an integer greater than or equal to 1, and M may be set to different values according to different scenarios. This is not limited in this embodiment.

Specifically, a description is provided with reference to the following example. It is assumed that, target voice segments detected from a plurality of (for example, 20) audio segments (it is assumed that each duration is T) include P1 to P5, P7 to P8, P10, and P17 to P20. Further, it is assumed that M is 5.

It can be known based on the foregoing assumptions that, the first five target voice segments are consecutive, there is a non-target voice segment (that is, P6) between P5 and P7, there is a non-target voice segment (that is, P9) between P8 and P10, and there are six non-target voice segments (that is, P11 to P16) between P10 and P17.

It can be confirmed according to first K (that is, first five) consecutive target voice segments that: a voice segment A including a voice signal is detected from a to-be-detected audio signal, where a starting moment of the voice segment A is a starting moment (that is, a starting moment of P1) of a first target voice segment in the first five target voice segments. Further, a quantity of non-target voice segments between P5 and P7 is 1, that is, less than M (M=5), and a quantity of non-target voice segments between P8 and P10 is 1, that is, less than M (M=5). Therefore, it can be determined that, the foregoing voice segment A is not ended at the non-target voice segment P6 and the non-target voice segment P9. A quantity of non-target voice segments between P10 and P17 is 6, that is, greater than M (M=5), that is, a quantity of consecutive non-target voice segments (P11 to P16) already satisfies M preset thresholds. Therefore, it can be determined that the voice segment A is ended at a starting moment (that is, a starting moment of P11) of a first non-target voice segment in the consecutive non-target voice segments (that is, P11 to P16), and then the starting moment of P11 is used as an ending moment of the voice segment A. That is, the starting moment of the voice segment A is a starting moment 0 of P1, and the ending moment is a starting moment 10T of P11.

Herein, it should be noted that, in this example, the foregoing consecutive target voice segments P17 to P20 are used to determine a detection process of a next voice segment B. The detection process may be performed by referring to the foregoing process, and details are not described herein again in this embodiment.

In addition, in this embodiment, a to-be-detected audio signal may be but is not limited to being obtained in real time, so as to detect whether an audio segment in an audio signal is a target voice segment, thereby accurately detecting a starting moment of a voice segment formed by the at least one target voice segment and an ending moment of the voice segment formed by the at least one target voice segment. As such, a human-computer interaction device can accurately reply after obtaining complete voice information that needs to be expressed by the voice segment, so as to implement human-computer interaction. It should be noted that, in a process of obtaining the to-be-detected audio signal in real time, voice detection may be but is not limited to repeatedly performing the foregoing detection steps. In this embodiment, details are not described herein again.

According to this embodiment provided by this application, when the at least one target voice segment is accurately detected, a human-computer interaction device can quickly determine, in real time, a starting moment and an ending moment of a voice segment formed by the at least one target voice segment, so that the human-computer interaction device can accurately respond to obtained voice information in real time, and an effect of natural human-computer interaction is achieved. In addition, by accurately detecting the starting moment and the ending moment of the voice signal corresponding to the at least one target voice segment, the human-computer interaction device also achieves an effect of increasing human-computer interaction efficiency, and solves a problem in a related technology that the human-computer interaction efficiency is relatively low because an interaction person needs to press a control button to trigger and start a human-computer interaction process.

As an optional solution, the apparatus may further include:

1) a first obtaining unit, configured to: after the to-be-detected audio signal is divided into the plurality of audio segments, obtain first N audio segments in the plurality of audio segments, where N is an integer greater than 1;

2) a construction unit, configured to construct a noise suppression model based on the first N audio segments, where the noise suppression model is used to perform noise suppression processing on an N+1th audio segment and audio segments thereafter in the plurality of audio segments; and

3) a second obtaining unit, configured to obtain an initial predetermined threshold condition based on the first N audio segments.

For example, specifically, a noise suppression model is constructed according to first N audio segments in the following manner. It is assumed that an audio signal includes a pure voice signal and an independent white Gaussian noise. Then, noise suppression may be performed in the following manner: Fourier transformation is performed on background noises of the first N audio segments, to obtain signal frequency domain information; a frequency domain logarithm spectral characteristic of the noises is estimated according to the frequency domain information of the Fourier transformation, to construct the noise suppression model. Further, for an N+1th audio segment and audio segments thereafter, it may be but is not limited to performing noise elimination processing on audio signals based on the noise suppression model and by using a maximum likelihood estimation method.

For another example, before a human-computer interaction process is started, an initialization operation is performed, a noise suppression model is constructed by using the audio segments without voice input, and an initial predetermined threshold condition used to determine an audio characteristic is obtained. The initial predetermined threshold condition may be but is not limited to being determined according to an average value of audio characteristics of the first N audio segments.

According to this embodiment provided by this application, an initialization operation of human-computer interaction is implemented by using first N audio segments in a plurality of audio segments. For example, a noise suppression model is constructed, to perform noise suppression processing on the plurality of audio segments, preventing interference of a noise to a voice signal. For example, an initial predetermined threshold condition used to determine an audio characteristic is obtained, so as to perform voice detection on the plurality of audio segments.

As an optional solution, the apparatus may further include:

1) a collection unit, configured to: before the audio characteristic in each audio segment of the plurality of audio segments is extracted, collect the to-be-detected audio signal, where first quantization is performed on the to-be-detected audio signal when the to-be-detected audio signal is collected; and

2) a quantization unit, configured to perform second quantization on the to-be-detected audio signal that is collected, where a quantization level of the second quantization is lower than a quantization level of the first quantization.

It should be noted that, in this embodiment, the first quantization may be but is not limited to being performed when the audio signal is collected; and the second quantization may be but is not limited to being performed after the noise suppression processing is performed. In addition, in this embodiment, a higher quantization level indicates more sensitive interference; that is, smaller interference indicates easier interference to a voice signal, and interference is implemented for a second time based on an adjusted quantization level, to achieve an effect of filtering out the interference twice.

Specifically, a description is provided with reference to the following example. For example, during first quantization, 16 bits are used, and during second quantization, 8 bits are used, that is, a range of [-128 to -127], thereby accurately distinguishing a voice signal from a noise by means of filtering for a second time.

Embodiment 3

According to an embodiment of the present invention, a voice detection device used to implement the voice detection method is provided. As shown in FIG. 11, the device may include:

1) a communications interface 1102, configured to obtain a to-be-detected audio signal;
2) a processor 1104, connected to the communications interface 1102, and configured to divide the to-be-detected audio signal into a plurality of audio segments; further configured to extract an audio characteristic in each audio segment of the plurality of audio segments, where the audio characteristic includes at least a time domain characteristic and a frequency domain characteristic of the audio segment; and further configured to detect at least one target voice segment from the plurality of audio segments according to the audio characteristic of each audio segment; and
3) a memory 1106, connected to the communications interface 1102 and the processor 1104, and configured to store the plurality of audio segments and the at least one target voice segment in the audio signal.

Optionally, for a specific example in this embodiment, refer to the examples described in Embodiment 1 and Embodiment 2, and details are not described herein again in this embodiment.

Embodiment 4

An embodiment of the present invention provides a storage medium. The storage medium is configured to store program code used to perform the following steps:
S1: Divide a to-be-detected audio signal into a plurality of audio segments.
S2: Extract an audio characteristic in each audio segment of the plurality of audio segments, where the audio characteristic includes at least a time domain characteristic and a frequency domain characteristic of the audio segment.
S3: Detect at least one target voice segment from the plurality of audio segments according to the audio characteristic of each audio segment.
The storage medium is further configured to store program code used to perform the following steps: determining whether the audio characteristic of a current audio segment satisfies a predetermined threshold condition, where the audio characteristic of the audio segment includes: a signal zero-crossing rate of the current audio segment in a time domain, short-time energy of the current audio segment in a time domain, spectral flatness of the current audio segment in a frequency domain, and signal information entropy of the current audio segment in a time domain; and when the audio characteristic of the current audio segment satisfies the predetermined threshold condition, detecting that the current audio segment is a target voice segment.
Optionally, in this embodiment, storage medium the storage medium is further configured to store program code used to perform the following steps: the detecting at least one target voice segment from the plurality of audio segments according to the audio characteristic of each audio segment may include: repeatedly performing the following steps, until a current audio segment is a last audio segment in the plurality of audio segments, where the current audio segment is initialized as a first audio segment in the plurality of audio segments: determining whether the audio characteristic of a current audio segment satisfies a predetermined threshold condition; when the audio characteristic of the current audio segment satisfies the predetermined threshold condition, detecting that the current audio segment is a target voice segment; or when the audio characteristic of the current audio segment does not satisfy the predetermined threshold condition, updating the predetermined threshold condition according to at least the audio characteristic of the current audio segment, to obtain an updated predetermined threshold condition; and determining whether the current audio segment is the last audio segment in the plurality of audio segments, and if the current audio segment is not the last audio segment, using a next audio segment of the current audio segment as the current audio segment.
The storage medium is further configured to store program code used to perform the following steps: the determining whether the audio characteristic of a current audio segment satisfies a predetermined threshold condition includes: determining whether the signal zero-crossing rate of the current audio segment in a time domain is greater than a first threshold; when the signal zero-crossing rate of the current audio segment is greater than the first threshold, determining whether the short-time energy of the current audio segment in the time domain is greater than a second threshold; when the short-time energy of the current audio segment is greater than the second threshold, determining whether the spectral flatness of the current audio segment in the frequency domain is less than a third threshold; and when the spectral flatness of the current audio segment in the frequency domain is less than the third threshold, determining whether the signal information entropy of the current audio segment in the time domain is less than a fourth threshold; and when the audio characteristic of the current audio segment satisfies the predetermined threshold condition, detecting that the current audio segment is a target voice segment may include: when determining that the signal information entropy of the current audio segment is less than the fourth threshold, detecting that the current audio segment is a target voice segment.

Optionally, in this embodiment, the storage medium is further configured to store program code used to perform the following step: when the short-time energy of the current audio segment is less than or equal to the second threshold, updating the second threshold according to at least the short-time energy of the current audio segment; or when the spectral flatness of the current audio segment is greater than or equal to the third threshold, updating the third threshold according to at least the spectral flatness of the current audio segment; or when the signal information entropy of the current audio segment is greater than or equal to the fourth threshold, updating the fourth threshold according to at least the signal information entropy of the current audio segment.

Optionally, in this embodiment, the storage medium is further configured to store program code used to perform the following step:

$$A = a \times A' + (1 - a) \times B,$$

where, a represents an attenuation coefficient, and when B represents the short-time energy of the current audio segment, A' represents the second threshold, and A represents the updated second threshold; when B represents the spectral flatness of the current audio segment, A' represents the third threshold, and A represents the updated third threshold; or when B represents the signal information entropy of the current audio segment, A' represents the fourth threshold, and A represents the updated fourth threshold.

Optionally, in this embodiment, the storage medium is further configured to store program code used to performing the following step: after at least one target voice segment is detected from the plurality of audio segments according to the audio characteristic of each audio segment, determining, according to a location of the at least one target voice segment in the plurality of audio segments, a starting moment and an ending moment of a continuous voice segment formed by the at least one target voice segment.

Optionally, in this embodiment, the storage medium is further configured to store program code used to perform the following steps: obtaining a starting moment of a first target voice segment in K consecutive target voice segments, and using the starting moment of the first target voice segment as the starting moment of the continuous voice segment; and after the starting moment of the continuous voice segment is confirmed, obtaining a starting moment of a first non-target voice segment in M consecutive non-target voice segments after a K$^{th}$ target voice segment, and using the starting moment of the first non-target voice segment as the ending moment of the continuous voice segment.

Optionally, in this embodiment, the storage medium is further configured to store program code used to perform the following steps: after the dividing a to-be-detected audio signal into a plurality of audio segments, obtaining first N audio segments in the plurality of audio segments, where N is an integer greater than 1; constructing a noise suppression model based on the first N audio segments, where the noise suppression model is used to perform noise suppression processing on an N+1$^{th}$ audio segment and audio segments thereafter in the plurality of audio segments; and obtaining an initial predetermined threshold condition based on the first N audio segments.

Optionally, in this embodiment, the storage medium is further configured to store program code used to perform the following steps: before the extracting an audio characteristic in each audio segment of the plurality of audio segments, collecting the to-be-detected audio signal, where first quantization is performed on the to-be-detected audio signal when the to-be-detected audio signal is collected; and performing second quantization on the to-be-detected audio signal that is collected, where a quantization level of the second quantization is lower than a quantization level of the first quantization.

Optionally, in this embodiment, the storage medium is further configured to store program code used to perform the following step: before the performing second quantization on the to-be-detected audio signal that is collected, performing noise suppression processing on the to-be-detected audio signal that is collected.

Optionally, in this embodiment, the storage medium may include but is not limited to various mediums that can store program code, for example, a USB disk, a read-only memory (ROM), a random access memory (RAM), a mobile disk, a magnetic disk, and an optical disc.

Optionally, for a specific example in this embodiment, refer to the examples described in Embodiment 1 and Embodiment 2, and details are not described herein again in this embodiment.

The sequence numbers of the preceding embodiments of the present invention are merely for description purpose but do not indicate the preference of the embodiments.

When being implemented in a form of software functional unit and sold or used as independent products, the integrated units in the foregoing embodiments may be stored the foregoing computer-readable storage medium. Based on such understanding, a technical solution of the present invention essentially or a portion that is of the technical solution of the present invention and that has contributions to the related technology or all of or a portion of the technical solution may be embodied in a software product form. The computer software product is stored in a storage medium, and includes several instructions used to make one or more computer devices (which may be a personal computer, a server, and a network device) perform all or some steps of the method in the embodiments of the present invention.

In the embodiments of the present invention, the descriptions about the embodiments have respective emphases. For a portion that is not described in an embodiment, refer to a related description in another embodiment.

In the several embodiments provided in the present application, it should be understood that the disclosed client may be implemented in other manners. The apparatus embodiments described in the foregoing are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the units or modules may be implemented in electronic or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

Described in the foregoing are only preferable implementations of the present invention. It should be pointed out that, the person of ordinary skill in the art may further make several improvements and modifications without disobeying the principle of the present invention.

Industrial practicability

In the embodiments of the present invention, a to-be-detected audio signal is divided into a plurality of audio segments, and an audio characteristic in each audio segment of the plurality of audio segments is extracted, where the audio characteristic includes at least a time domain characteristic and a frequency domain characteristic of the audio segment. By virtue of the solution, a plurality of characteristics of an audio segment in different domains are used to accurately detect at least one target voice segment from the plurality of audio segments, so as to reduce interference of a noise signal in the audio segments to a voice detection process, thereby increasing voice detection accuracy, and solving a problem in a related technology that detection accuracy is relatively low when voice detection is performed by using only a single characteristic.

**Claims**

1. A voice detection method, comprising:

   dividing (S302) a to-be-detected audio signal into a plurality of audio segments;
   extracting (S304) an audio characteristic of each audio segment of the plurality of audio segments, wherein the audio characteristic comprises: a signal zero-crossing rate of a current audio segment in a time domain, short-time energy of the current audio segment in a time domain, spectral flatness of the current audio segment in a frequency domain, and signal information entropy of the current audio segment in a time domain; and
   detecting (S306) at least one target voice segment from the plurality of audio segments according to the audio characteristic of each audio segment;
   wherein the detecting (S306) at least one target voice segment from the plurality of audio segments according to the audio characteristic of each audio segment comprises:

      determining whether the audio characteristic of a current audio segment satisfies a predetermined threshold condition, comprising: determining (S904) whether the signal zero-crossing rate of the current audio segment in a time domain is greater than a first threshold; when the signal zero-crossing rate of the current audio segment is greater than the first threshold, determining (S906) whether the short-time energy of the current audio segment in the time domain is greater than a second threshold; when the short-time energy of the current audio segment is greater than the second threshold, determining (S908) whether the spectral flatness of the current audio segment in the frequency domain is less than a third threshold; and when the spectral flatness of the current audio segment in the frequency domain is less than the third threshold, determining (S910) whether the signal information entropy of the current audio segment in the time domain is less than a fourth threshold; and
      when the audio characteristic of the current audio segment satisfies the predetermined threshold condition, detecting that the current audio segment is a target voice segment, comprising: when determining that the signal information entropy of the current audio segment is less than the fourth threshold, detecting that the current audio segment is a target voice segment.

2. The method as claimed in claim 1, wherein the detecting (S306) at least one target voice segment from the plurality of audio segments according to the audio characteristic of each audio segment comprises: repeatedly performing the following steps, until a current audio segment is a last audio segment in the plurality of audio segments, wherein the current audio segment is initialized as a first audio segment in the plurality of audio segments:

determining whether the audio characteristic of the current audio segment satisfies the predetermined threshold condition;
when the audio characteristic of the current audio segment satisfies the predetermined threshold condition, detecting that the current audio segment is the target voice segment; or
when the audio characteristic of the current audio segment does not satisfy the predetermined threshold condition, updating the predetermined threshold condition according to at least the audio characteristic of the current audio segment, to obtain an updated predetermined threshold condition; and
determining whether the current audio segment is the last audio segment in the plurality of audio segments, and if the current audio segment is not the last audio segment, using a next audio segment of the current audio segment as the current audio segment;
wherein the updating the predetermined threshold condition according to at least the audio characteristic of the current audio segment comprises:

when the short-time energy of the current audio segment is less than or equal to the second threshold, updating the second threshold according to at least the short-time energy of the current audio segment; or
when the spectral flatness of the current audio segment is greater than or equal to the third threshold, updating the third threshold according to at least the spectral flatness of the current audio segment; or
when the signal information entropy of the current audio segment is greater than or equal to the fourth threshold, updating the fourth threshold according to at least the signal information entropy of the current audio segment.

3. The method as claimed in claim 2, wherein the updating the predetermined threshold condition according to at least the audio characteristic of the current audio segment comprises:

$$A = a \times A' + (1 - a) \times B,$$

wherein, a represents an attenuation coefficient, and when B represents the short-time energy of the current audio segment, A' represents the second threshold, and A represents the updated second threshold; when B represents the spectral flatness of the current audio segment, A' represents the third threshold, and A represents the updated third threshold; or when B represents the signal information entropy of the current audio segment, A' represents the fourth threshold, and A represents the updated fourth threshold.

4. The method as claimed in claim 1, wherein after the detecting (S306) at least one target voice segment from the plurality of audio segments according to the audio characteristic of each audio segment, the method further comprises:
determining, according to a location of the at least one target voice segment in the plurality of audio segments, a starting moment and an ending moment of a continuous voice segment formed by the at least one target voice segment.

5. The method as claimed in claim 4, wherein the determining, according to a location of the at least one target voice segment in the plurality of audio segments, a starting moment and an ending moment of a continuous voice segment formed by the at least one target voice segment comprises:

obtaining a starting moment of a first target voice segment in K consecutive target voice segments, and using the starting moment of the first target voice segment as the starting moment of the continuous voice segment; and after the starting moment of the continuous voice segment is confirmed, obtaining a starting moment of a first non-target voice segment in M consecutive non-target voice segments after a $K^{th}$ target voice segment, and using the starting moment of the first non-target voice segment as the ending moment of the continuous voice segment.

**6.** The method as claimed in claim 1 or 2, wherein after the dividing (S302) a to-be-detected audio signal into a plurality of audio segments, the method further comprises:

obtaining first N audio segments in the plurality of audio segments, wherein N is an integer greater than 1;
constructing a noise suppression model based on the first N audio segments, wherein a frequency domain logarithm spectral characteristic of background noises of the first N audio segments is estimated according to frequency domain information obtained by Fourier transformation performing on the background noises of the first N audio segments, to construct the noise suppression model, and the noise suppression model is used to perform noise suppression processing on an $N+1^{th}$ audio segment and audio segments thereafter in the plurality of audio segments; and
obtaining an initial predetermined threshold condition based on the first N audio segments.

**7.** The method as claimed in claim 1, wherein before the extracting an audio characteristic of each audio segment of the plurality of audio segments (S304), the method further comprises:

collecting the to-be-detected audio signal, wherein first quantization is performed on the to-be-detected audio signal when the to-be-detected audio signal is collected; and
performing second quantization on the to-be-detected audio signal that is collected, wherein a number of bits used for the second quantization is less than a number of bits used for the first quantization.

**8.** The method as claimed in claim 7, wherein before the performing second quantization on the to-be-detected audio signal that is collected, the method further comprises:
performing noise suppression processing on the to-be-detected audio signal that is collected.

**9.** A voice detection apparatus, **characterized by** comprising:

a division unit (1002), configured to divide a to-be-detected audio signal into a plurality of audio segments;
an extraction unit (1004), configured to extract an audio characteristic of each audio segment of the plurality of audio segments, wherein the audio characteristic comprises: a signal zero-crossing rate of a current audio segment in a time domain, short-time energy of the current audio segment in a time domain, spectral flatness of the current audio segment in a frequency domain, and signal information entropy of the current audio segment in a time domain; and
a detection unit (1006), configured to detect at least one target voice segment from the plurality of audio segments according to the audio characteristic of each audio segment;
wherein the detection unit (1006) comprises:

a judgment module, configured to determine whether the audio characteristic of a current audio segment satisfies a predetermined threshold condition, wherein the determine whether the audio characteristic of the current audio segment satisfies the predetermined threshold condition comprises: determining whether the signal zero-crossing rate of the current audio segment in a time domain is greater than a first threshold; when the signal zero-crossing rate of the current audio segment is greater than the first threshold, determining whether the short-time energy of the current audio segment in the time domain is greater than a second threshold; when the short-time energy of the current audio segment is greater than the second threshold, determining whether the spectral flatness of the current audio segment in the frequency domain is less than a third threshold; and when the spectral flatness of the current audio segment in the frequency domain is less than the third threshold, determining whether the signal information entropy of the current audio segment in the time domain is less than a fourth threshold; and
a detection module, configured to: when the audio characteristic of the current audio segment satisfies the predetermined threshold condition, detect that the current audio segment is a target voice segment, wherein the when the audio characteristic of the current audio segment satisfies the predetermined threshold condition, detect that the current audio segment is the target voice segment comprises: when determining that the signal information entropy of the current audio segment is less than the fourth threshold, detecting that the current audio segment is a target voice segment.

**10.** The apparatus as claimed in claim 9, wherein the detection unit (1006) comprises:
a judgment module, configured to repeatedly perform the following steps, until a current audio segment is a last audio segment in the plurality of audio segments, wherein the current audio segment is initialized as a first audio segment in the plurality of audio segments:

determining whether the audio characteristic of the current audio segment satisfies the predetermined threshold condition;

when the audio characteristic of the current audio segment satisfies the predetermined threshold condition, detecting that the current audio segment is the target voice segment; or

when the audio characteristic of the current audio segment does not satisfy the predetermined threshold condition, updating the predetermined threshold condition according to at least the audio characteristic of the current audio segment, to obtain an updated predetermined threshold condition; and

determining whether the current audio segment is the last audio segment in the plurality of audio segments, and if the current audio segment is not the last audio segment, using a next audio segment of the current audio segment as the current audio segment;

wherein the judgment module performs the following step to implement the updating the predetermined threshold condition according to at least the audio characteristic of the current audio segment:

when the short-time energy of the current audio segment is less than or equal to the second threshold, updating the second threshold according to at least the short-time energy of the current audio segment; or when the spectral flatness of the current audio segment is greater than or equal to the third threshold, updating the third threshold according to at least the spectral flatness of the current audio segment; or when the signal information entropy of the current audio segment is greater than or equal to the fourth threshold, updating the fourth threshold according to at least the signal information entropy of the current audio segment.

11. A storage medium, wherein the storage medium is configured to store program code configured to implement the voice detection method as claimed in any one of claims 1 to 8.

**Patentansprüche**

1. Verfahren zur Stimmerkennung, umfassend:

Aufteilen (S302) eines zu erfassenden Audiosignals in eine Vielzahl von Audiosegmenten;
Extrahieren (S304) einer Audiocharakteristik jedes Audiosegments der Vielzahl von Audiosegmenten, wobei die Audiocharakteristik umfasst: eine Signalnulldurchgangsrate eines aktuellen Audiosegments in einer Zeit-Domäne, Kurzzeitenergie des aktuellen Audiosegments in einer Zeit-Domäne, eine spektrale Flachheit des aktuellen Audiosegments in einer Frequenz-Domäne, und Signalinformationsentropie des aktuellen Audiosegments in einer Zeit-Domäne; und
Erkennen (S306) mindestens eines Zielsprachensegments aus der Vielzahl von Audiosegmenten gemäß der Audiocharakteristik jedes Audiosegments;
wobei das Erkennen (S306) mindestens eines Zielsprachensegments aus der Vielzahl von Audiosegmenten gemäß der Audiocharakteristik jedes Audiosegments umfasst:

Bestimmen, ob die Audiocharakteristik eines aktuellen Audiosegments eine vorbestimmte Schwellenwertbedingung erfüllt, umfassend: Bestimmen (S904), ob die Signalnulldurchgangsrate des aktuellen Audiosegments in einer Zeit-Domäne größer als ein erster Schwellenwert ist; wenn die Signalnulldurchgangsrate des aktuellen Audiosegments größer als der erste Schwellenwert ist, Bestimmen (S906), ob die Kurzzeitenergie des aktuellen Audiosegments in der Zeit-Domäne größer als ein zweiter Schwellenwert ist; wenn die Kurzzeitenergie des aktuellen Audiosegments größer als der zweite Schwellenwert ist, Bestimmen (S908), ob die spektrale Flachheit des aktuellen Audiosegments im Frequenzbereich kleiner als ein dritter Schwellenwert ist; und wenn die spektrale Flachheit des aktuellen Audiosegments im Frequenzbereich kleiner als der dritte Schwellenwert ist, Bestimmen (S910), ob die Signalinformationsentropie des aktuellen Audiosegments im Zeitbereich kleiner als ein vierter Schwellenwert ist; und
wenn die Audiocharakteristik des aktuellen Audiosegments die vorbestimmte Schwellenwertbedingung erfüllt, Erkennen, dass das aktuelle Audiosegment ein Zielsprachsegment ist, umfassend: wenn bestimmt wird, dass die Signalinformationsentropie des aktuellen Audiosegments kleiner als der vierte Schwellenwert ist, Erkennen, dass das aktuelle Audiosegment ein Zielsprachsegment ist.

2. Verfahren nach Anspruch 1, wobei das Erkennen (S306) mindestens eines Zielsprachensegments aus der Vielzahl von Audiosegmenten gemäß der Audiocharakteristik jedes Audiosegments umfasst: wiederholtes Durchführen der folgenden Schritte, bis ein aktuelles Audiosegment ein letztes Audiosegment in der Vielzahl von Audiosegmenten ist, wobei das aktuelle Audiosegment als ein erstes Audiosegment in der Vielzahl von Audiosegmenten initialisiert wird:

Bestimmen, ob die Audiocharakteristik des aktuellen Audiosegments die vorgegebene Schwellenwertbedingung erfüllt;

wenn die Audiocharakteristik des aktuellen Audiosegments die vorbestimmte Schwellenwertbedingung erfüllt, Erkennen, dass das aktuelle Audiosegment das Zielsprachsegment ist; oder

wenn die Audiocharakteristik des aktuellen Audiosegments die vorbestimmte Schwellenwertbedingung nicht erfüllt, Aktualisieren der vorbestimmten Schwellenwertbedingung gemäß mindestens der Audiocharakteristik des aktuellen Audiosegments, um eine aktualisierte vorbestimmte Schwellenwertbedingung zu erhalten; und

Bestimmen, ob das aktuelle Audiosegment das letzte Audiosegment in der Vielzahl von Audiosegmenten ist, und wenn das aktuelle Audiosegment nicht das letzte Audiosegment ist, Verwenden eines nächsten Audiosegments des aktuellen Audiosegments als das aktuelle Audiosegment;

wobei das Aktualisieren der vorbestimmten Schwellenwertbedingung gemäß mindestens der Audiocharakteristik des aktuellen Audiosegments umfasst:

wenn die Kurzzeitenergie des aktuellen Audiosegments kleiner oder gleich dem zweiten Schwellenwert ist, Aktualisieren des zweiten Schwellenwerts gemäß mindestens der Kurzzeitenergie des aktuellen Audiosegments; oder

wenn die spektrale Flachheit des aktuellen Audiosegments größer oder gleich dem dritten Schwellenwert ist, Aktualisieren des dritten Schwellenwerts gemäß mindestens der spektralen Flachheit des aktuellen Audiosegments; oder

wenn die Signalinformationsentropie des aktuellen Audiosegments größer oder gleich dem vierten Schwellenwert ist, Aktualisieren des vierten Schwellenwerts gemäß mindestens der Signalinformationsentropie des aktuellen Audiosegments.

3. Verfahren nach Anspruch 2, wobei das Aktualisieren der vorbestimmten Schwellenwertbedingung gemäß mindestens der Audiocharakteristik des aktuellen Audiosegments umfasst:

$$A = a \times A' + (1 - a) \times B,$$

wobei a einen Dämpfungskoeffizienten darstellt, und wenn B die Kurzzeitenergie des aktuellen Audiosegments darstellt, A' den zweiten Schwellenwert darstellt und A den aktualisierten zweiten Schwellenwert darstellt; wenn B die spektrale Flachheit des aktuellen Audiosegments darstellt, A' den dritten Schwellenwert darstellt und A den aktualisierten dritten Schwellenwert darstellt; oder wenn B die Signalinformationsentropie des aktuellen Audiosegments darstellt, A' den vierten Schwellenwert darstellt und A den aktualisierten vierten Schwellenwert darstellt.

4. Verfahren nach Anspruch 1, wobei nach dem Erkennen (S306) mindestens eines Zielsprachensegments aus der Vielzahl von Audiosegmenten gemäß der Audiocharakteristik jedes Audiosegments das Verfahren ferner umfasst: Bestimmen eines Anfangszeitpunkts und eines Endzeitpunkts eines kontinuierlichen Sprachsegments, das durch das mindestens eine Zielsprachsegment gebildet wird, in Abhängigkeit von einer Position des mindestens einen Zielsprachsegments in der Vielzahl von Audiosegmenten.

5. Verfahren nach Anspruch 4, wobei das Bestimmen eines Anfangszeitpunkts und eines Endzeitpunkts eines kontinuierlichen Sprachsegments, das durch das mindestens eine Zielsprachsegment gebildet wird, gemäß einer Position des mindestens einen Zielsprachsegments in der Vielzahl von Audiosegmenten umfasst:

Erhalten eines Startmoments eines ersten Zielsprachensegments in K aufeinanderfolgenden Zielsprachensegmenten und Verwenden des Startmoments des ersten Zielsprachensegments als das Startmoment des kontinuierlichen Sprachsegments; und

nachdem der Anfangszeitpunkt des kontinuierlichen Sprachsegments bestätigt ist, Erhalten eines Anfangszeitpunkts eines ersten Nicht-Ziel-Sprachsegments in M aufeinanderfolgenden Nicht-Ziel-Sprachsegmenten nach einem K-ten Ziel-Sprachsegment, und Verwenden des Anfangszeitpunkts des ersten Nicht-Ziel-Sprachsegments als Endzeitpunkt des kontinuierlichen Sprachsegments.

6. Verfahren nach Anspruch 1 oder 2, wobei das Verfahren nach dem Aufteilen (S302) eines zu detektierenden Audiosignals in eine Vielzahl von Audiosegmenten ferner umfasst:

Erhalten der ersten N Audiosegmente in der Vielzahl von Audiosegmenten, wobei N eine ganze Zahl größer als 1 ist;

Konstruieren eines Rauschunterdrückungsmodells auf der Grundlage der ersten N Audiosegmente, wobei eine logarithmische Spektralcharakteristik der Hintergrundgeräusche der ersten N Audiosegmente im Frequenzbereich entsprechend der Frequenzbereichsinformation geschätzt wird, die durch eine Fourier-Transformation erhalten wird, die an den Hintergrundgeräuschen der ersten N Audiosegmente durchgeführt wird, um das Rauschunterdrückungsmodell zu konstruieren, wobei das Rauschunterdrückungsmodell verwendet wird, um eine Rauschunterdrückungsverarbeitung an einem N+1-ten Audiosegment und den Audiosegmenten danach in der Vielzahl von Audiosegmenten durchzuführen; und

Erlangen einer anfänglichen vorbestimmten Schwellenwertbedingung auf der Grundlage der ersten N Audiosegmente.

7. Verfahren nach Anspruch 1, wobei das Verfahren vor dem Extrahieren einer Audiocharakteristik jedes Audiosegments der Vielzahl von Audiosegmenten (S304) ferner umfasst:

Sammeln des zu detektierenden Audiosignals, wobei eine erste Quantisierung an dem zu detektierenden Audiosignal durchgeführt wird, wenn das zu detektierende Audiosignal gesammelt wird; und

Durchführen einer zweiten Quantisierung an dem zu erfassenden Audiosignal, das gesammelt wird, wobei eine Anzahl von Bits, die für die zweite Quantisierung verwendet wird, geringer ist als eine Anzahl von Bits, die für die erste Quantisierung verwendet wird.

8. Verfahren nach Anspruch 7, wobei das Verfahren vor der Durchführung der zweiten Quantisierung an dem zu erfassenden Audiosignal, das gesammelt wird, ferner umfasst:
Durchführung einer Rauschunterdrückungs-Verarbeitung des erfassten, zu erfassenden Audiosignals.

9. Vorrichtung zur Spracherkennung, die umfasst:

eine Teilungseinheit (1002), die so konfiguriert ist, dass sie ein zu erfassendes Audiosignal in eine Vielzahl von Audiosegmenten unterteilt;

eine Extraktionseinheit (1004), die so konfiguriert ist, dass sie eine Audiocharakteristik jedes Audiosegments der Vielzahl von Audiosegmenten extrahiert, wobei die Audiocharakteristik umfasst: eine Signalnulldurchgangsrate eines aktuellen Audiosegments in einem Zeitbereich, eine Kurzzeitenergie des aktuellen Audiosegments in einem Zeitbereich, eine spektrale Flachheit des aktuellen Audiosegments in einem Frequenzbereich und Signalinformationsentropie des aktuellen Audiosegments in einem Zeitbereich; und

eine Erkennungseinheit (1006), die so konfiguriert ist, dass sie mindestens ein Zielsprachensegment aus der Vielzahl von Audiosegmenten gemäß der Audiocharakteristik jedes Audiosegments erkennt;

wobei die Detektionseinheit (1006) umfasst:

ein Beurteilungsmodul, das konfiguriert ist, um zu bestimmen, ob die Audiocharakteristik eines aktuellen Audiosegments eine vorbestimmte Schwellenwertbedingung erfüllt, wobei die Bestimmung, ob die Audiocharakteristik des aktuellen Audiosegments die vorbestimmte Schwellenwertbedingung erfüllt, umfasst Bestimmen, ob die Signalnulldurchgangsrate des aktuellen Audiosegments in einem Zeitbereich größer als ein erster Schwellenwert ist; wenn die Signalnulldurchgangsrate des aktuellen Audiosegments größer als der erste Schwellenwert ist, Bestimmen, ob die Kurzzeitenergie des aktuellen Audiosegments in dem Zeitbereich größer als ein zweiter Schwellenwert ist; wenn die Kurzzeitenergie des aktuellen Audiosegments größer als der zweite Schwellenwert ist, Bestimmen, ob die spektrale Flachheit des aktuellen Audiosegments im Frequenzbereich kleiner als ein dritter Schwellenwert ist; und wenn die spektrale Flachheit des aktuellen Audiosegments im Frequenzbereich kleiner als der dritte Schwellenwert ist, Bestimmen, ob die Signalinformationsentropie des aktuellen Audiosegments im Zeitbereich kleiner als ein vierter Schwellenwert ist; und

ein Erfassungsmodul, das konfiguriert ist, um: wenn die Audiocharakteristik des aktuellen Audiosegments die vorbestimmte Schwellenwertbedingung erfüllt, zu erfassen, dass das aktuelle Audiosegment ein Zielsprachensegment ist, wobei das Erfassen, dass das aktuelle Audiosegment das Zielsprachensegment ist, wenn die Audiocharakteristik des aktuellen Audiosegments die vorbestimmte Schwellenwertbedingung erfüllt, umfasst: wenn bestimmt wird, dass die Signalinformationsentropie des aktuellen Audiosegments kleiner als der vierte Schwellenwert ist, Erfassen, dass das aktuelle Audiosegment ein Zielsprachensegment ist.

**10.** Vorrichtung nach Anspruch 9, wobei die Detektionseinheit (1006) umfasst:

ein Beurteilungsmodul, das so konfiguriert ist, dass es wiederholt die folgenden Schritte durchführt, bis ein aktuelles Audiosegment ein letztes Audiosegment in der Vielzahl von Audiosegmenten ist, wobei das aktuelle Audiosegment als ein erstes Audiosegment in der Vielzahl von Audiosegmenten initialisiert wird:

Bestimmen, ob die Audiocharakteristik des aktuellen Audiosegments die vorgegebene Schwellenwertbedingung erfüllt;

wenn die Audiocharakteristik des aktuellen Audiosegments die vorbestimmte Schwellenwertbedingung erfüllt, Erkennen, dass das aktuelle Audiosegment das Zielsprachsegment ist; oder

wenn die Audiocharakteristik des aktuellen Audiosegments die vorbestimmte Schwellenwertbedingung nicht erfüllt, Aktualisieren der vorbestimmten Schwellenwertbedingung gemäß mindestens der Audiocharakteristik des aktuellen Audiosegments, um eine aktualisierte vorbestimmte Schwellenwertbedingung zu erhalten; und Bestimmen, ob das aktuelle Audiosegment das letzte Audiosegment in der Vielzahl von Audiosegmenten ist, und wenn das aktuelle Audiosegment nicht das letzte Audiosegment ist, Verwenden eines nächsten Audiosegments des aktuellen Audiosegments als das aktuelle Audiosegment;

wobei das Beurteilungsmodul den folgenden Schritt durchführt, um die Aktualisierung der vorbestimmten Schwellenwertbedingung gemäß mindestens der Audiocharakteristik des aktuellen Audiosegments durchzuführen:

wenn die Kurzzeitenergie des aktuellen Audiosegments kleiner oder gleich dem zweiten Schwellenwert ist, Aktualisieren des zweiten Schwellenwerts gemäß mindestens der Kurzzeitenergie des aktuellen Audiosegments; oder

wenn die spektrale Flachheit des aktuellen Audiosegments größer oder gleich dem dritten Schwellenwert ist, Aktualisieren des dritten Schwellenwerts gemäß mindestens der spektralen Flachheit des aktuellen Audiosegments; oder

wenn die Signalinformationsentropie des aktuellen Audiosegments größer oder gleich dem vierten Schwellenwert ist, Aktualisieren des vierten Schwellenwerts gemäß mindestens der Signalinformationsentropie des aktuellen Audiosegments.

**11.** Speichermedium, wobei das Speichermedium so konfiguriert ist, dass es Programmcode speichert, der so konfiguriert ist, dass er das Verfahren zur Stimmerkennung nach einem der Ansprüche 1 bis 8 implementiert.

**Revendications**

**1.** Procédé de détection vocale, consistant à :

diviser (S302) un signal audio à détecter en une pluralité de segments audio,
extraire (S304) un élément audio de chaque segment audio de la pluralité des segments audio, l'élément audio comprenant : un taux de passage par zéro de signal du segment audio actuel dans un domaine temporel, l'énergie de très courte durée du segment audio actuel dans un domaine temporel, la platitude spectrale du segment audio actuel dans un domaine fréquentiel, et l'entropie des informations de signal du segment audio actuel dans un domaine temporel ; et
détecter (S306) au moins un segment audio cible à partir de la pluralité des segments audio conformément à l'élément audio de chaque segment audio ;
dans lequel la détection (S306) d'au moins un segment audio cible à partir de la pluralité des segments audio conformément à l'élément audio de chaque segment audio consiste à :

déterminer si l'élément audio d'un segment audio actuel remplit une condition de seuil prédéfinie, consiste à : déterminer (S904) si le taux de passage par zéro de signal du segment audio actuel dans un domaine temporel est supérieur au premier seuil,
déterminer (S906) si l'énergie de très courte durée du segment audio actuel dans le domaine temporel est supérieur à un second seuil ; lorsque l'énergie de très courte durée du segment audio actuel est supérieure au deuxième seuil, déterminer (S908) si la platitude spectrale du segment audio actuel dans le domaine fréquentiel est inférieure à un troisième seuil ; et lorsque la platitude spectrale du segment audio actuel dans le domaine fréquentiel est inférieure au troisième seuil, déterminer (S910) si l'entropie des informations de signal du segment audio actuel dans le domaine temporel est inférieure à un quatrième seuil ; et lorsque l'élément audio du segment audio actuel satisfait la condition de seuil prédéfinie, détecter que le segment audio actuel est un segment audio cible, consistant à : lorsqu'il est déterminé que l'entropie des informations de signal du segment audio actuel est inférieure au quatrième seuil, détecter que le segment audio actuel est un segment audio cible.

2. Procédé selon la revendication 1, dans lequel la détection (S306) d'au moins un segment audio cible à partir de la pluralité des segments audio conformément à l'élément audio de chaque segment audio consistant à : répéter les étapes suivantes jusqu'à ce qu'un segment audio cible soit au moins un segment audio dans la pluralité des segments audio, le segment audio actuel étant initialisé comme un premier segment audio dans la pluralité des segments audio :

déterminer si l'élément audio du segment audio actuel satisfait la condition de seuil prédéterminée ;
lorsque l'élément audio du segment audio actuel satisfait la condition de seuil prédéfinie, détecter que le segment audio actuel est le segment audio cible; ou
lorsque l'élément audio du segment audio actuel ne satisfait pas la condition de seuil prédéterminée, mettre à jour la condition de seuil prédéterminée conformément à au moins l'élément audio du segment audio actuel, pour obtenir une condition de seuil prédéterminée mise à jour ; et
déterminer si le segment audio actuel est le dernier segment audio dans la pluralité des segments audio, et si le segment audio actuel n'est pas le dernier segment audio, utiliser le segment audio suivant le segment audio actuel en tant que segment audio actuel ;
dans lequel la mise à jour de la condition de seuil prédéterminée conformément audit élément audio du segment audio actuel consiste à :

lorsque l'énergie à très courte durée du segment audio actuel est inférieure ou égale au deuxième seuil, mettre à jour le deuxième seuil conformément à au moins l'énergie de très courte durée du segment audio actuel ; ou
lorsque la platitude spectrale du segment audio actuel est inférieure ou égale au troisième seuil, mettre à jour le troisième seuil conformément à au moins la platitude spectrale du segment audio actuel ; ou
lorsque l'entropie des informations de signal du segment audio actuel est inférieure ou égale au quatrième seuil, mettre à jour le quatrième seuil conformément à au moins l'entropie des informations de signal du segment audio actuel.

3. Procédé selon la revendication 2, dans lequel la mise à jour de la condition de seuil prédéterminée conformément à au moins l'élément audio du segment audio actuel consiste à :

$$A = a \times A' + (1 - a) \times B,$$

où, a représente un coefficient d'affaiblissement, et lorsque B représente l'énergie de très courte durée du segment audio actuel, A' représente le deuxième seuil, et A représente le deuxième seuil mis à jour ; lorsque B représente la platitude spectrale du segment audio actuel, A' représente le troisième seuil, et A représente le troisième seuil mis à jour ; ou lorsque B représente l'entropie des informations de signal du segment audio actuel, A' représente le quatrième seuil, et A représente le quatrième seuil mis à jour.

4. Procédé selon la revendication 1, dans lequel après la détection (S306) d'au moins un segment audio cible à partir de la pluralité des segments audio conformément à l'élément audio de chaque segment audio, le procédé consiste en outre à :
déterminer, en fonction d'un emplacement dudit segment audio cible dans la pluralité des segments audio, un moment de démarrage et un moment de fin d'un segment audio continu formé par ledit segment audio cible.

5. Procédé selon la revendication 4, dans lequel la détermination, en fonction d'un emplacement dudit segment audio cible dans la pluralité des segments audio, d'un moment de démarrage et d'un moment de fin d'un segment audio continu formé par ledit segment audio, consiste à :

obtenir un moment de démarrage d'un premier segment vocal cible dans K segments vocaux cibles consécutifs, et utiliser le moment de démarrage du premier segment vocal cible comme le moment de démarrage du segment vocal continu ; et
après que le moment de démarrage du segment vocal continu est confirmé, obtenir un moment de démarrage d'un premier segment vocal non cible dans M segments vocaux non cibles consécutifs après un K-ème segment vocal cible, et utiliser le moment de démarrage du premier segment vocal non cible comme le moment de fin du segment vocal continu.

**6.** Procédé selon la revendication 1 ou 2 dans lequel, après la division (S302) du signal audio à détecter en une pluralité de segments audio, le procédé consiste en outre à :

obtenir des premiers N segments audio dans la pluralité des segments audio, N étant un nombre entier supérieur à 1 ;

construire un modèle de suppression de bruit à partir des premiers N segments audio, un élément spectral de logarithme de domaine fréquentiel de bruits de fond des premiers N segments audio étant estimé conformément aux informations de domaine fréquentiel obtenues par la transformation de Fourier effectuant sur les bruits de fond des premiers N segments audio, pour construire le modèle de suppression de bruit, et le modèle de suppression de bruit étant utilisé pour procéder au traitement de suppression de bruit sur un N+1er segment audio et sur les segments audio suivants dans la pluralité des segments audio ; et

obtenir une condition de seuil prédéterminé initiale en fonction des premiers N segments audio.

**7.** Procédé selon la revendication 1, dans lequel avant l'extraction d'un élément audio de chaque segment audio de la pluralité des segments audio (S304), le procédé consiste en outre à :

collecter le signal audio à détecter, la première quantification étant effectuée sur le signal audio à détecter lorsque le signal audio à détecter est collecté ; et

effectuer une seconde quantification sur le signal audio à détecter qui est collecté, le nombre de bits utilisés pour la seconde quantification étant inférieur au nombre de bits utilisés pour la première quantification.

**8.** Procédé selon la revendication 7, dans lequel avant la réalisation de la seconde quantification sur le signal audio à détecter qui est collecté, le procédé consiste en outre à :

procéder au traitement de suppression de bruit sur le signal audio à détecter qui est collecté.

**9.** Appareil de détection vocale, comprenant :

une unité de division (1002) conçue pour diviser un signal audio , à détecter en une pluralité de segments audio ;

une unité d'extraction (1004) conçue pour extraire un élément audio de chaque segment audio de la pluralité des segments audio, l'élément audio comprenant : un taux de passage par zéro de signal d'un segment audio actuel dans un domaine temporel, l'énergie de très courte durée du segment audio actuel dans un domaine temporel, la platitude spectrale du segment audio actuel dans un domaine fréquentiel, et l'entropie d'informations de signal du segment audio actuel dans un domaine temporel ; et

une unité de détection (1006), conçue pour détecter au moins un segment audio cible à partir de la pluralité des segments audio conformément à l'élément audio de chaque segment audio ;

l'unité de détection (1006) comprenant :

un module d'estimation, conçu pour déterminer si l'élément audio d'un segment audio actuel satisfait une condition de seuil prédéterminée, la détermination si l'élément audio du segment audio actuel satisfait la condition de seuil prédéterminée consistant à : déterminer si le taux de passage par zéro du signal du segment audio actuel dans un domaine temporel est supérieur à un premier seuil ; lorsque le taux de passage par zéro du signal du segment audio actuel est supérieur au premier seuil, déterminer si l'énergie de très courte durée du segment audio actuel dans le domaine temporel est supérieur à un deuxième seuil ; lorsque l'énergie de très courte durée du segment audio actuel est supérieur au deuxième seuil, déterminer si la platitude spectrale du segment audio actuel dans le domaine fréquentiel est inférieure à un troisième seuil ; et lorsque la platitude spectrale du segment audio actuel dans le domaine fréquentiel est inférieure au troisième seuil, déterminer si l'entropie des informations de signal du segment audio actuel dans le domaine temporel est inférieure à un quatrième seuil ; et

un module de détection, conçu pour : lorsque l'élément audio du segment audio actuel satisfait la condition de seuil prédéterminée, détecter que le segment audio actuel est un segment audio cible, lorsque l'élément audio du segment audio actuel satisfait à la condition de seuil prédéterminée, détecter que le segment audio actuel est le segment audio cible consistant à : lors de la détermination que l'entropie des informations de signal du segment audio actuel est inférieure au quatrième seuil, détecter que le segment audio actuel est un segment audio cible.

**10.** Appareil selon la revendication 9, dans lequel l'unité de détection (1006) comprend :

un module d'estimation, conçu pour répéter les étapes suivantes, jusqu'à ce qu'un segment audio actuel soit un dernier segment audio dans la pluralité des segments audio, le segment audio actuel étant initialisé comme le premier segment audio dans la pluralité des segments audio :

déterminer si l'élément audio du segment audio actuel satisfait la condition de seuil prédéterminée ;
lorsque l'élément audio du segment audio actuel satisfait la condition de seuil prédéfinie, détecter que le segment audio actuel est le segment audio cible; ou
lorsque l'élément audio du segment audio actuel ne satisfait pas la condition de seuil prédéterminée mettre à jour la condition de seuil prédéterminée conformément à au moins l'élément audio du segment audio actuel, pour obtenir une condition de seuil prédéterminée mise à jour ; et
déterminer si le segment audio actuel est le dernier segment audio dans la pluralité des segments audio, et si le segment audio actuel n'est pas le dernier segment audio, utiliser le segment audio suivant le segment audio actuel en tant que segment audio actuel ;
dans lequel le module d'estimation effectue l'étape suivante consistant à mettre en œuvre la mise à jour de la condition de seuil prédéterminée conformément à au moins l'élément audio du segment audio actuel :

lorsque l'énergie à très courte durée du segment audio actuel est inférieure ou égale au deuxième seuil, mettre à jour le deuxième seuil conformément à au moins l'énergie de très courte durée du segment audio actuel ; ou
lorsque la platitude spectrale du segment audio actuel est inférieure ou égale au troisième seuil, mettre à jour le troisième seuil conformément à au moins la platitude spectrale du segment audio actuel ; ou
lorsque l'entropie des informations de signal du segment audio actuel est inférieure ou égale au quatrième seuil, mettre à jour le quatrième seuil conformément à au moins l'entropie des informations de signal du segment audio actuel.

11. Support de stockage, le support de stockage étant configuré pour stocker le code de programme configuré pour mettre en œuvre le procédé de détection vocale selon l'une quelconque des revendications 1 à 8.

102

FIG. 1

102

FIG. 2

| Divide a to-be-detected audio signal into a plurality of audio segments | S302 |

| Extract an audio characteristic in each audio segment of the plurality of audio segments, where the audio characteristic includes at least a time domain characteristic and a frequency domain characteristic of the audio segment | S304 |

| Detect at least one target voice segment from the plurality of audio segments according to the audio characteristic of each audio segment | S306 |

FIG. 3

FIG. 4

FIG. 5

FIG. 6

FIG. 7

FIG. 8

```
┌─────────────────────────────────────┐
│  S902: Obtain an audio characteristic of a │
│         current audio segment              │
└─────────────────────────────────────┘
                   │
                   ▼
            S904: Determine
    whether a signal zero-crossing rate
    of the current audio segment is greater
            than a first threshold
        │ Yes                    │ No
        ▼                        │
            S906: Determine      │
    whether short-time energy of the current
    audio segment is greater than a second
                threshold
        │ Yes                    │ No
        ▼                        │
            S908: Determine      │
    whether spectral flatness of the current
    audio segment is less than a third
                threshold
        │ Yes              No    │
        ▼                        │
            S910: Determine      │
    whether signal information entropy
    of the current audio segment is less
            than a fourth threshold
        │ Yes              No    │
        ▼                        │
```

Determine the current audio segment as a non-target voice segment

┌─────────────────────────────────────┐
│  Determine the current audio segment as a │
│          target voice segment             │
└─────────────────────────────────────┘

FIG. 9

Division unit 1002

Extraction unit 1004

Detection unit 1006

Voice detection apparatus

FIG. 10

Communications interface 1102

Memory 1106

Processor 1104

Voice detection device

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2016102572447
- US 2015332667 A1
- CN 104409081 A
- CN 101625857 A